# EUROPEAN PATENT APPLICATION

(11) **EP 3 982 624 A1**
(43) Date of publication of application: **13.04.2022**
(21) Application number: 20819075.1
(22) Date of filing: 27.04.2020
(51) Int. Cl.: H04N 5/232, G03B 15/00, G03B 17/18

(54) **IMAGE PROCESSING DEVICE, IMAGE PROCESSING METHOD, AND PROGRAM**

(30) Priority: 07.06.2019 JP 2019106828
(71) Applicant: Sony Group Corporation, Tokyo 108-0075 (JP)
(72) Inventor: MORI, Kazuaki, Tokyo 108-0075 (JP); NUMATA, Tomoki, Tokyo 108-0075 (JP)
(74) Representative: D Young & Co LLP
(86) International application number: PCT/JP2020/017943
(87) International publication number: WO 2020/246181

(57) **Abstract**

To enable a photo opportunity not to be missed while reducing a bandwidth and power consumption related to image transmission when a captured image is displayed on a display unit.

An image processing device according to the present technology includes an image generation unit configured to generate a first frame rate image based on a captured image and a second frame rate image having a frame rate lower than the first frame rate image; and an output unit configured to output the first frame rate image and the second frame rate image generated by the image generation unit so as to be displayed in different display regions of a display unit.

## Description

### TECHNICAL FIELD

The present technology relates to an image processing device, an image processing method, and a program, and particularly relates to a technical field related to image transmission when a captured image is displayed.

### BACKGROUND ART

For example, an imaging device such as a digital still camera or a digital video camera is provided with a display unit such as a display panel and an electronic viewfinder provided on a back surface of the device, and a user can perform imaging while monitoring a captured image displayed as a live image on the display unit.

The smoothness of a display image on the display unit changes depending on a frame rate, and greatly affects the operability of the user. If the frame rate is not sufficient, the display image becomes a jerky image, and thus the possibility that the user misses a photo opportunity increases. In particular, in a case of capturing a fast moving object, the followability of the display image with respect to actual movement of the object is significantly deteriorated, leading to a significant decrease in operability.

From such a background, it can be said that it is desirable to display a high frame rate (HFR) image as a live image.

However, since the HFR image has an increased amount of information in a time axis direction as compared with a low frame rate (LFR) image, a large power consumption and a large bandwidth are required when the image is transmitted.

Techniques for improving the problems have been researched and developed, and for example, Patent Document 1 below discloses a technique for displaying an HFR image only during a period in which a user determines a composition by half-pressing a shutter button or the like.

### CITATION LIST

### PATENT DOCUMENT

Patent Document 1: Japanese Patent Application Laid-Open No. 2011-30084

### SUMMARY OF THE INVENTION

### PROBLEMS TO BE SOLVED BY THE INVENTION

However, in the technique described in Patent Document 1, it can be said that the HFR image is not displayed in a period in which the user does not half-press the shutter button, and there is a period in which a photo opportunity is missed.

The present technology has been made in view of the above circumstances, and an object is to enable a photo opportunity not to be missed while reducing a bandwidth and power consumption related to image transmission when a captured image is displayed on a display unit.

### SOLUTIONS TO PROBLEMS

An image processing device according to the present technology includes an image generation unit configured to generate a first frame rate image based on a captured image and a second frame rate image having a frame rate lower than the first frame rate image; and an output unit configured to output the first frame rate image and the second frame rate image generated by the image generation unit so as to be displayed in different display regions of a display unit.

Therefore, it becomes possible to set the first (high) frame rate image for an image of a portion where an object is displayed and set the second (low) frame rate image for an image of the other portion, of an image constituting a display image. That is, by setting the low frame rate for the image of the portion other than the portion where the object is displayed, the amount of image data to be transmitted for display can be reduced as compared with a case of setting the high frame rate for the entire display image. Meanwhile, by setting the high frame rate for the image of the portion where the object is displayed, it is possible to prevent a decrease in responsiveness of the display image with respect to a motion of the object.

In the above-described image processing device according to the present technology, the image generation unit can be configured to generate an image representing notification information for a user as the second frame rate image.

Therefore, it becomes possible to display the image representing the notification information to the user, such as an OSD image for providing notification of various settings, states, and the like of an imaging device, as the low frame rate image.

In the above-described image processing device according to the present technology, a mode of displaying the notification information on the display unit and a mode of not displaying the notification information can be switchable according to an operation, and the image generation unit can be configured to generate the second frame rate image representing the notification information in the mode of displaying the notification information.

Therefore, it becomes possible to prevent display of the low frame rate image representing the notification information under the mode of not displaying the notification information. That is, it becomes possible to prevent an operation of displaying an image other than the captured image regardless of the user's operation (instruction).

In the above-described image processing device according to the present technology, the image generation unit can be configured to perform frame update for the second frame rate image at update timing of the notification information.

Therefore, for example, image content of the low frame rate image is updated at the update timing of the notification information such as a remaining battery level or imaging mode information of the imaging device.

In the above-described image processing device according to the present technology, the image generation unit can be configured to generate the second frame rate image representing the notification information as an image to be displayed in a display region on an outer periphery of the display region of the first frame rate image on the display unit.

That is, the low frame rate image representing the notification information is displayed in the display region on the outer periphery of the high frame rate image where the object is displayed. Therefore, even if an image of the entire region (total field of view) of the captured image is displayed in the display region of the high frame rate image, a part thereof is not blocked by the low frame rate image.

In the above-described image processing device according to the present technology, the image generation unit can be configured to generate an image of a partial region in the captured image as the first frame rate image, and generates an image of a region other than the partial region in the captured image as the second frame rate image.

Therefore, it becomes possible to display the captured image in the entire display region of the display unit in enabling a photo opportunity not to be missed while reducing a bandwidth and power consumption related to image transmission.

In the above-described image processing device according to the present technology, the image generation unit can be configured to generate an image of a detection region of a specific object in the captured image as the first frame rate image.

The specific object means an object that is a detection target in object detection processing for the captured image.

In the above-described image processing device according to the present technology, the image generation unit can be configured to generate an image of a detection region of a moving object in the captured image as the first frame rate image.

Therefore, it is possible to set the high frame rate image only for a region where the responsiveness of the display image is to be enhanced and set the low frame rate image for the other region in displaying the captured image as a live image on the display unit.

In the above-described image processing device according to the present technology, the output unit can be configured to output information giving an instruction on the display regions of the first frame rate image and the second frame rate image to the display unit.

Therefore, the instruction on the display regions of the high frame rate image and the low frame rate image is given to the display unit.

In the above-described image processing device according to the present technology, the output unit can be configured to output the first frame rate image and the second frame rate image to a single transmission line in a time-division manner.

Therefore, it becomes possible to aggregate cables for image transmission to the display unit into one cable.

In the above-described image processing device according to the present technology, the output unit can be configured to time-divisionally output each partial image obtained by dividing the second frame rate image into regions to the transmission line.

Therefore, it becomes possible to output a plurality of frames of the high frame rate image while outputting an entire one frame of the low frame rate image.

In the above-described image processing device according to the present technology, it is possible to have a configuration including the display unit configured to combine and display the first frame rate image and the second frame rate image output by the output unit.

The combine referred to here means to integrate a plurality of images into a single image.

In the above-described image processing device according to the present technology, the image generation unit can be configured to set a region to be the first frame rate image in the captured image on the basis of an operation of a user.

Therefore, it becomes possible to set a region including the object that the user pays attention to as a region of the high frame rate image.

In the above-described image processing device according to the present technology, the image generation unit can be configured to set a region to be the first frame rate image on the basis of an operation of designating a position on a screen where the captured image is displayed.

Therefore, the operation of designating the region to be the high frame rate image can be implemented by an intuitive operation of designating the position on the screen while confirming the captured image displayed on the screen.

In the above-described image processing device according to the present technology, the operation of designating a position on a screen can be an operation of touching the screen.

Therefore, the operation of designating the region to be the high frame rate image can be implemented by an intuitive operation of touching a required position on the screen on which the captured image is displayed.

In the above-described image processing device according to the present technology, the image generation unit can be configured to set a range of a region to be the first frame rate image on the basis of an operation of giving an instruction on a direction in a plane of a screen where the captured image is displayed.

Therefore, the operation of designating the range of the region to be the high frame rate image can be implemented by an intuitive operation of designating the direction in the plane of the screen while confirming the captured image displayed on the screen.

In the above-described image processing device according to the present technology, the operation of giving an instruction on a direction can be an operation of tracing the screen.

Therefore, the operation of designating the range of the region to be the high frame rate image is implemented by an intuitive operation of tracing the screen on which the captured image is displayed.

Furthermore, an image processing method according to the present technology is an image processing method including generating a first frame rate image based on a captured image and a second frame rate image having a frame rate lower than the first frame rate image; and outputting the generated first frame rate image and the generated second frame rate image so as to be displayed in different display regions of a display unit.

According to such an image processing method, effects similar to the effects of the above-described image processing device according to the present technology can be obtained.

Furthermore, a program according to the present technology is a program for causing an information processing device to implement functions to: generate a first frame rate image based on a captured image and a second frame rate image having a frame rate lower than the first frame rate image; and output the generated first frame rate image and the generated second frame rate image so as to be displayed in different display regions of a display unit.

With such a program, the above-described image processing device according to the present technology is implemented.

### BRIEF DESCRIPTION OF DRAWINGS

Fig. 1 is a block diagram illustrating an internal configuration example of an image processing device as a first embodiment according to the present technology.
Fig. 2 is an explanatory diagram of a display example of a captured image in an OSD display mode.
Fig. 3 is an explanatory diagram of region instruction information corresponding to the display example of Fig. 2.
Fig. 4 is an explanatory diagram of a display example of a captured image in an OSD non-display mode.
Fig. 5 is an explanatory diagram of region instruction information corresponding to the display example of Fig. 4.
Fig. 6 is a functional block diagram illustrating functions as an embodiment in a blocked manner.
Fig. 7 is a flowchart illustrating an example of a specific processing procedure for implementing a captured image display method as the first embodiment.
Fig. 8 is a flowchart illustrating an example of the specific processing procedure for implementing the captured image display method as the first embodiment together with Fig. 7.
Fig. 9 is explanatory diagrams of a countermeasure example against movement of an object.
Fig. 10 is a flowchart illustrating different frame rate output processing corresponding to the countermeasure example illustrated in Fig. 9.
Fig. 11 is a block diagram illustrating an internal configuration example of an image processing device as a second embodiment.
Fig. 12 is an explanatory diagram of an example of a method of time-divisionally outputting an HFR image and an LFR image to a single transmission line.
Fig. 13 is a block diagram illustrating an internal configuration example of an image processing device as a third embodiment.
Fig. 14 is a diagram illustrating an example of changing a position of an HFR region according to a touch operation.
Fig. 15 is a diagram illustrating an example of changing a range of an HFR region according to a touch operation.
Fig. 16 is a diagram schematically illustrating an overall configuration of an operating room system.
Fig. 17 is a diagram illustrating a display example of an operation screen on a centralized operation panel.
Fig. 18 is a diagram illustrating an example of a state of a surgical operation to which the operating room system is applied.
Fig. 19 is a block diagram illustrating an example of functional configurations of a camera head and a CCU illustrated in Fig. 18.
Fig. 20 is an explanatory diagram of a setting example of an HFR region in an application.
Fig. 21 is an explanatory diagram of another setting example of the HFR region in an application.

### MODE FOR CARRYING OUT THE INVENTION

Hereinafter, embodiments will be described in the following order.
<1. First Embodiment>
[1-1. Device Configuration Example]
[1-2. Captured Image Display Method as First Embodiment]
[1-3. Processing Procedure]
[1-4. Countermeasures Against Movement of Object]
[1-5. Modification]
<2. Second Embodiment>
<3. Third Embodiment>
<4. Modification>
<5. Application>
<6. Summary of Embodiments>
<7. Present technology>

### <1. First Embodiment>

### [1-1. Device Configuration Example]

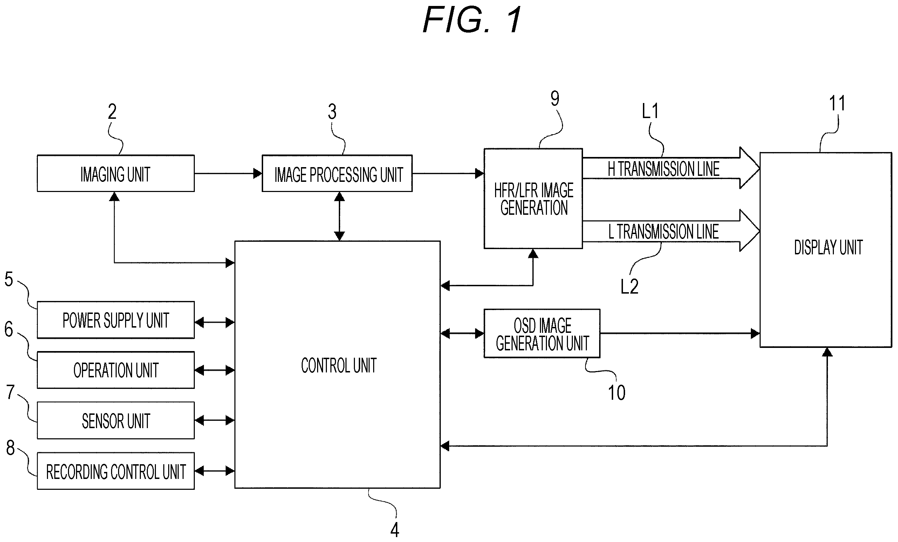

Fig. 1 is a block diagram illustrating an internal configuration example of an imaging device 1 as a first embodiment of an image processing device according to the present technology.

The imaging device 1 is configured as a digital camera device, and is configured to be able to capture an object and record image data as a moving image or a still image on a recording medium.

As illustrated, the imaging device 1 includes an imaging unit 2, an image processing unit 3, a control unit 4, a power supply unit 5, an operation unit 6, a sensor unit 7, a recording control unit 8, a high frame rate/low frame rate (HFR/LFR) image generation unit 9, an on screen display (OSD) image generation unit 10, and a display unit 11.

Here, an HFR means a frame rate higher than an LFR. In the present example, the HFR is assumed to be a frame rate n times (n is a natural number of 2 or more) the LFR, such as twice or three times the LFR, unless otherwise specified.

The imaging unit 2 includes an optical system including lenses such as a cover lens, a zoom lens, and a focus lens, a shutter, a diaphragm mechanism, and the like, and an imaging element such as a complementary metal oxide semiconductor (CMOS) type or a charge coupled device (CCD) type that receives light from an object incident through the optical system.

The imaging unit 2 executes, for an electrical signal obtained by photoelectrically converting the light received by the imaging element, correlated double sampling (CDS) processing, automatic gain control (AGC) processing, and the like and further performs analog/digital (A/D) conversion processing. Then, the imaging unit 2 outputs a captured image signal (hereinafter also referred to as "captured image data") as digital data to the image processing unit 3 in the subsequent stage.

The image processing unit 3 is configured as an image processing processor by, for example, a digital signal processor (DSP) or the like, and performs various types of signal processing for the digital signal (captured image signal) from the imaging unit 2. For example, the image processing unit 3 applies signal processing such as white balance adjustment processing, color correction processing, gamma correction processing, Y/C conversion processing, and auto exposure (AE) processing.

The control unit 4 includes a microcomputer (arithmetic processing unit) provided with a central processing unit (CPU), a read only memory (ROM), a random access memory (RAM), and the like. The above-described RAM is used for temporary storage of data, programs, and the like, as a work region for various types of data processing by the CPU. The ROM is used to store an operating system (OS) for the CPU to control each unit, content files such as image files, an application program for various operations, firmware, and the like.

The control unit 4 performs overall control of the imaging device 1 by executing a program stored in the ROM or the like. For example, the control unit 4 controls operations of necessary units for operations of a lens system such as focus, diaphragm adjustment, and shutter speed in the imaging unit 2, instructions of various types of signal processing in the image processing unit 3, an imaging operation and a recording operation (recording operation by the recording control unit 8) according to a user's operation using the operation unit 6, a reproduction operation of a recorded image file, a user interface operation, and the like.

Furthermore, the control unit 4 performs mode switching as to whether or not to display an OSD image generated by the OSD image generation unit 10 on the display unit 11. Specifically, the control unit 4 switches an OSD display mode of displaying an OSD image on the display unit 11 and an OSD non-display mode of not displaying an OSD image on the display unit 11. The control unit 4 switches the OSD display mode and the OSD non-display mode in accordance with an operation of the operation unit 6.

The power supply unit 5 includes a battery that supplies power for operating the imaging device 1 and a power supply integrated circuit (IC) that performs supply control of a power supply voltage necessary for driving the entire imaging device 1. The power supply IC performs supply control of the power supply voltage on the basis of an instruction from the control unit 4.

The operation unit 6 collectively represents input devices for the user to perform various operation inputs. Examples of an operator included in the operation unit 6 include operators such as various buttons and dials provided in a housing of the imaging device 1. Furthermore, the operator of the operation unit 6 may include a touch panel that detects a touch operation on a screen of the display unit 11.

The operation unit 6 detects an operation by the user and outputs a signal corresponding to the detected operation to the control unit 4.

The sensor unit 7 comprehensively represents various sensors mounted on the imaging device 1. For example, a gyro sensor (angular velocity sensor), an acceleration sensor, and the like for detecting a camera shake, or the entire movement of the imaging device 1 such as the posture or movement of the imaging device 1 are provided. Furthermore, an illuminance sensor that detects external illuminance for exposure adjustment and the like, and a distance measuring sensor that measures an object distance may be provided.

The recording control unit 8 performs recording and reproduction on a recording medium by a nonvolatile memory, for example, in response to an instruction from the control unit 4. For example, the recording control unit 8 performs processing of recording image files and thumbnail images of moving image data and still image data, and the like on the recording medium.

Various actual forms of the recording control unit 8 are conceivable. For example, the recording control unit 8 may be configured as a flash memory and a write/read circuit of the flash memory built in the imaging device 1 or may be configured as a form by a card recording/reproducing unit that performs recording/reproducing access to a recording medium attachable/detachable to/from the imaging device 1, for example, a memory card (portable flash memory or the like). Furthermore, as a form incorporated in the imaging device 1, the imaging device 1 may be implemented as a hard disk drive (HDD), a solid state drive (SSD), or the like.

The HFR/LFR image generation unit 9 applies resolution conversion processing to the captured image data input from the imaging unit 2 via the image processing unit 3, and generates an image of a partial region in the captured image data as an HFR image and an image of a region other than the partial region as an LFR image (moving image having a frame rate lower than the HFR image) on the basis of an instruction from the control unit 4.

The HFR image generated by the HFR/LFR image generation unit 9 is output to the display unit 11 via an H transmission line L1, and the LFR image is output to the display unit 11 via an L transmission line L2.

In the present example, the HFR/LFR image generation unit 9 outputs an image of the entire region of the captured image data as an HFR image in the OSD display mode on the basis of the instruction from the control unit 4. The HFR/LFR image generation unit 9 performs processing of generating and outputting the HFR image and the LFR image based on the captured image data in the OSD non-display mode.

Note that a specific example of the processing of generating the HFR image and the LFR image by the HFR/LFR image generation unit 9 will be described below again.

The OSD image generation unit 10 generates an OSD image representing various kinds of notification information to the user, such as a current time, an exposure mode, an F-number (diaphragm value), and a remaining battery level.

The OSD image generation unit 10 generates an OSD image at a frame rate instructed from the control unit 4, and outputs the generated OSD image to the display unit 11 on the basis of the instruction from the control unit 4.

The display unit 11 displays various types of information to the user as an imaging person. The display unit 11 is, for example, a display device such as a liquid crystal display (LCD) or an organic electroluminescence (EL) display arranged in a housing of the imaging device 1.

The display unit 11 displays various types of information on the screen on the basis of the instruction from the control unit 4. For example, the display unit 11 displays the captured image obtained by the imaging unit 2 and input via the HFR/LFR image generation unit 9 as a live image (object monitoring image) on the basis of the instruction from the control unit 4. Furthermore, the display unit 11 can display a reproduction image of the image data read from the recording medium by the recording control unit 8.

Furthermore, the display unit 11 displays an image obtained by combining the OSD image generated by the OSD image generation unit 10 with the live image in the OSD display mode on the basis of the instruction from the control unit 4. In the OSD non-display mode, the display unit 11 displays an image obtained by combining the HFR image and the LFR image input from the HFR/LFR image generation unit 9.

### [1-2. Captured Image Display Method as First Embodiment]

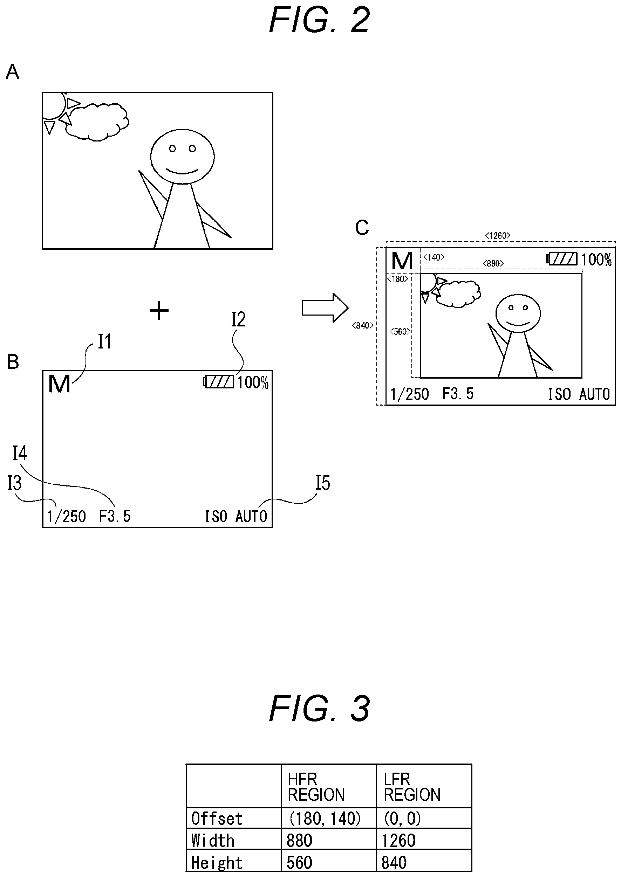

Hereinafter, a captured image display method as the first embodiment will be described with reference to Figs. 2 to 5.

Fig. 2 is an explanatory diagram of a display example of the captured image in the OSD display mode.

Fig. 2A illustrates an example of the captured image obtained by the imaging unit 2, and Fig. 2B illustrates an example of the OSD image generated by the OSD image generation unit 10. As illustrated in Fig. 2B, the OSD image includes images representing various types of notification information I exemplified as I1 to I5 in the drawing. Specifically, the OSD image of the present example includes images representing imaging mode notification information I1 for providing notification of an imaging mode currently being set, remaining battery level notification information I2 for providing notification of a remaining battery level (remaining battery level), shutter speed notification information I3 for providing notification of a shutter speed, F-number notification information I4 for providing notification of an F-number, and ISO mode notification information I5 for providing notification of an ISO (sensitivity) mode.

In the OSD display mode, the captured image is an HFR image, and the OSD image is an LFR image. Specifically, in the OSD display mode, the control unit 4 instructs the HFR/LFR image generation unit 9 to generate an image of the entire region of the captured image as an HFR image, and instructs the OSD image generation unit 10 to output the OSD image at the frame rate as the LFR. Then, the control unit 4 instructs the display unit 11 to generate a combined image obtained by combining the HFR image as the image of the entire region of the captured image output from the HFR/LFR image generation unit 9 and the LFR image as the OSD image output from the OSD image generation unit 10 as illustrated in Fig. 2C, and display the combined image.

The combine referred to here means to integrate a plurality of images into a single image.

In the present example, as illustrated in Fig. 2C, the OSD image as the LFR image is an image displayed in a display region on an outer periphery of the HFR image when combined with the HFR image. Therefore, the OSD image generation unit 10 of the present example generates, as the OSD image, an image having the above-described various types of notification information I (I1 to I5) arranged near an outer peripheral end.

In the OSD display mode, the control unit 4 outputs region instruction information that is information giving an instruction on display regions of the HFR image and the LFR image to the display unit 11.

Fig. 3 is an explanatory diagram of the region instruction information.

The region instruction information in the present example is information that defines parameters of an offset of a drawing start position on the display unit 11 ("Offset" in the drawing), a drawing width ("Width" in the drawing), and a drawing height ("Height" in the drawing) for each HFR image and LFR image. The offset of the drawing start position is a parameter representing offset amounts (the number of images) in a horizontal direction and a vertical direction from an origin position (0, 0) of a drawing space.

By outputting such region instruction information to the display unit 11, images having different frame rates can be displayed on the display unit 11 in an appropriate layout.

In the OSD display mode, the HFR/LFR image generation unit 9 performs resolution conversion of the captured image according to an image display mode illustrated in Fig. 2C. Specifically, in the case of the image display mode illustrated in Fig. 2C, the HFR/LFR image generation unit 9 converts the resolution of the captured image data input via the image processing unit 3 into 880 × 560.

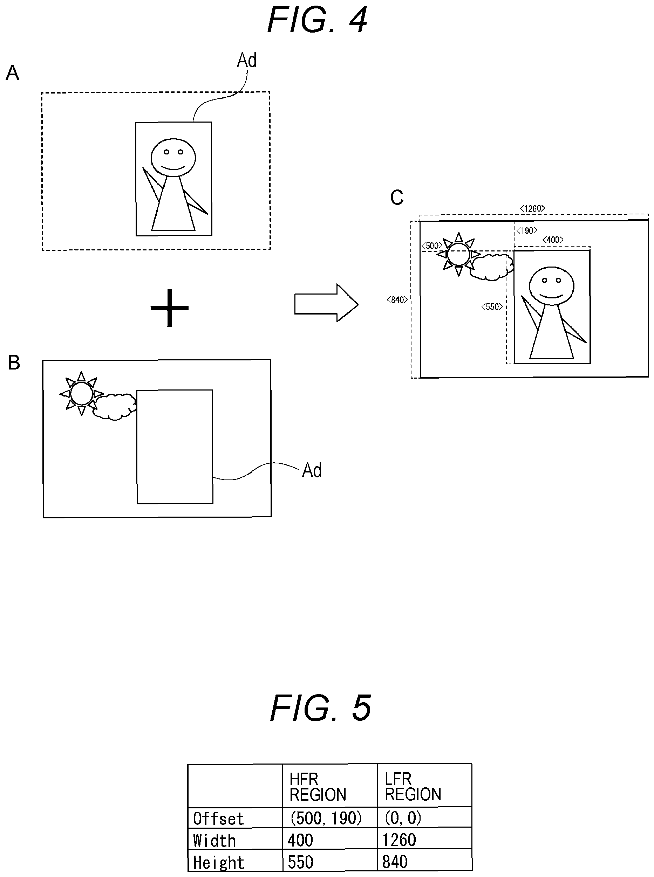

Fig. 4 is an explanatory diagram of a display example of the captured image in the OSD non-display mode.

In the OSD non-display mode, an image of a partial region in the captured image is an HFR image, an image of a region other than the partial region is an LFR image, and an image obtained by combining the HFR image and the LFR image is displayed on the display unit 11.

Specifically, in the present example, a specific object (hereinafter referred to as "specific object") is detected from the captured image, an image of a detection region Ad of the specific object is set as the HFR image (see Fig. 4A), and an image of a region other than the detection region Ad is set as the LFR image (see Fig. 4B). Then, the combined image of the HFR image as the image of the detection region Ad and the LFR image as the image of the region other than the detection region Ad is displayed on the display unit 11 (see Fig. 4C).

In the present example, an object as a moving object is detected as the specific object. Therefore, in the OSD non-display mode, the HFR/LFR image generation unit 9 calculates a motion vector for the captured image data input via the image processing unit 3, and detects the region of the object as the moving object on the basis of the motion vector. The motion vector can be calculated by a moving object detection method for time-series image data such as a Lucas-Kanade method.

For example, the HFR/LFR image generation unit 9 detects a region where the calculated motion vector is equal to or larger than a threshold as the region of the object as the moving object.

Detection of the specific object is not limited to detection of the moving object. For example, an object such as a person or an animal can be detected. For example, in the case where the object as a person is the specific object, a method of detecting a region of the specific object on the basis of a result of face detection or the like can be adopted. The method of detecting the region of the specific object may be an appropriate method according to the type of the specific object, and is not limited to the specific method.

In the OSD non-display mode, the HFR/LFR image generation unit 9 generates and outputs the region instruction information for the display unit 11.

Fig. 5 illustrates the region instruction information corresponding to the case of combining the images illustrated in Fig. 4C.

Here, the HFR/LFR image generation unit 9 generates images at frame rates based on the instructions from the control unit 4 as the HFR image and the LFR image, respectively.

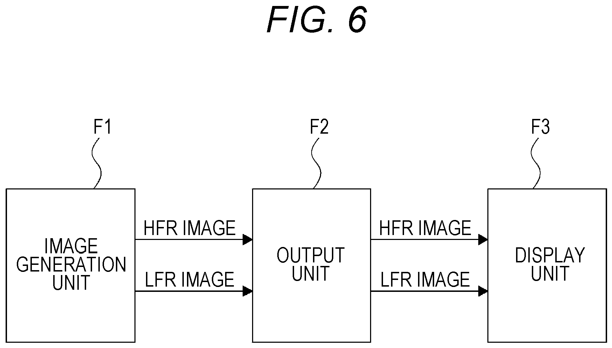

Fig. 6 is a functional block diagram illustrating functions that the imaging device 1 has as an embodiment in a blocked manner.

As illustrated in the drawing, the imaging device 1 has at least functions as an image generation unit F1, an output unit F2, and a display unit F3 for the functions related to the above-described captured image display method.

The image generation unit F1 represents the function to generate the HFR image based on the captured image and the LFR image having a lower frame rate than the HFR image as the images to be displayed in the different display regions of the display unit F3, and corresponds to the control unit 4, the HFR/LFR image generation unit 9, and the OSD image generation unit 10 in the configuration illustrated in Fig. 1.

The output unit F2 represents the function to output the HFR image and the LFR image generated by the image generation unit F1 to the display unit F3, and corresponds to the HFR/LFR image generation unit 9 and the OSD image generation unit 10 in the configuration illustrated in Fig. 1.

The display unit F3 represents the function to combine and display the HFR image and the LFR image output by the output unit, and corresponds to the display unit 11 in the configuration illustrated in Fig. 1.

### [1-3. Processing Procedure]

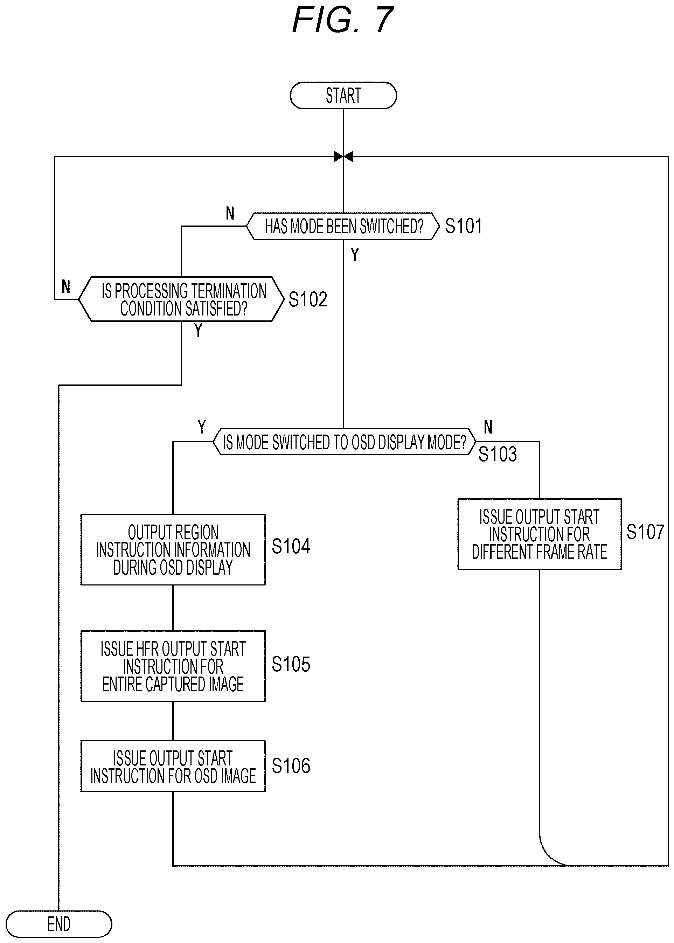

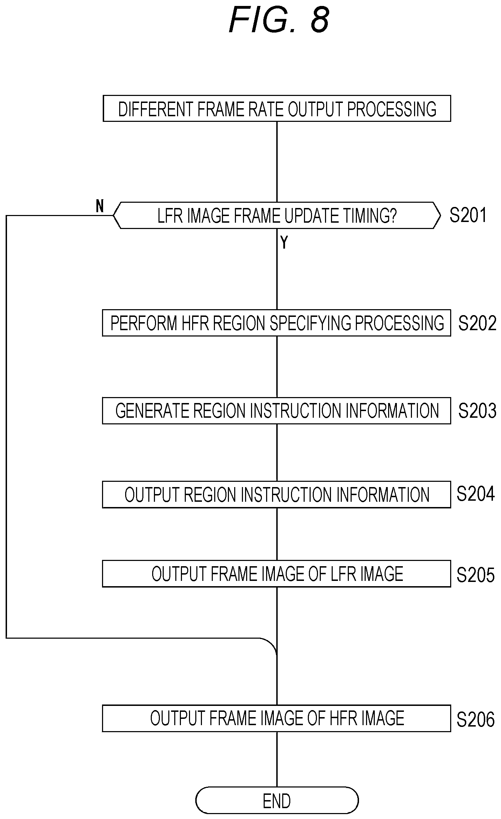

An example of a specific processing procedure for implementing the captured image display method as the first embodiment described above will be described with reference to the flowcharts of Figs. 7 and 8.

The processing illustrated in Fig. 7 is processing executed by the control unit 4, and the processing illustrated in Fig. 8 is processing executed by the HFR/LFR image generation unit 9.

In Fig. 7, the control unit 4 determines the presence or absence of mode switching in step S101. That is, the presence or absence of a switching operation between the OSD display mode and the OSD non-display mode is waited.

In a case where it is determined that there is no mode switching operation and there is no mode switching, the control unit 4 determines in step S102 whether or not a processing end condition is satisfied. The processing end condition here means an end condition of the processing illustrated in Fig. 7, and for example, an operation to switch the operation mode of the imaging device 1 from an imaging mode of displaying the captured image as a live image on the display unit 11 to a reproduction mode of displaying an image reproduced by the recording control unit 8 from the recording medium to the display unit 11 is conceivable to be the condition.

In a case where the processing end condition is determined not to be satisfied, the control unit 4 returns to step S101 and determines again the presence or absence of mode switching. In a case where the processing end condition is determined to be satisfied, the control unit 4 terminates the series of processing illustrated in Fig. 7.

In a case where the presence of the mode switching is determined in step S101, the control unit 4 proceeds to step S103 and determines whether or not the operation mode has been switched to the OSD display mode. In the case where the operation mode has been switched to the OSD display mode, the control unit 4 advances the processing to step S104. On the other hand, in the case where the operation mode has not been switched to the OSD display mode (that is, the operation mode has been switched to the OSD non-display mode), the control unit 4 advances the processing to step S107.

In step S104, the control unit 4 outputs the region instruction information during OSD display to the display unit 11. That is, the control unit 4 outputs the region instruction information (see Fig. 3) giving an instruction on the display regions of the HFR image (the entire region of the captured image) and the OSD image as illustrated in Fig. 2C above to the display unit 11.

In subsequent step S105, the control unit 4 instructs the HFR/LFR image generation unit 9 to start an HFR output of the entire region of the captured image. That is, the control unit 4 instructs the HFR/LFR image generation unit 9 to start generation and output of the HFR image having the entire region of the captured image data input from the image processing unit 3 at the frame rate as the HFR.

Next, in step S106, the control unit 4 instructs the OSD image generation unit 10 to start outputting the OSD image. At this time, the control unit 4 instructs the OSD image generation unit 10 to set the frame rate of the OSD image to the LFR so that the LFR image is output as the OSD image.

The display unit 11 combines and displays the HFR image output from the HFR/LFR image generation unit 9 and the OSD image output from the OSD image generation unit 10 on the basis of the region instruction information output in step S104. As a result, display of the captured image (and the OSD image) in the form illustrated in Fig. 2C is implemented in the OSD display mode.

Note that the order of the processing in steps S104, S105, and S106 is not limited to the illustrated example.

Meanwhile, in step S107 where the operation mode has not been switched to the OSD display mode, the control unit 4 instructs the HFR/LFR image generation unit 9 to start different frame rate output. The different frame rate output means to output an image of a partial region of the captured image as the HFR image and to output an image of a region other than the partial region as the LFR image.

The control unit 4 returns to step S101 upon execution of the processing in step S106 or S107.

Fig. 8 is a flowchart illustrating an example of different frame rate output processing executed by the HFR/LFR image generation unit 9 in response to the instruction to start different frame rate output performed in step S107.

The HFR/LFR image generation unit 9 repeatedly executes the processing illustrated in Fig. 8 with a frame period of the HFR image.

First, in step S201, the HFR/LFR image generation unit 9 determines whether or not it is frame update timing of the LFR image. The processing of step S201 corresponds to processing of determining whether or not the current frame is the frame corresponding to the frame update timing of the LFR image in each frame of the HFR image.

Since it is not necessary to output a frame image of the LFR image if it is not the frame update timing of the LFR image, the HFR/LFR image generation unit 9 outputs the frame image of the HFR image to the display unit 11 in step S206 and terminates the series of processing illustrated in Fig. 8.

Meanwhile, when it is the frame update timing of the LFR image, the HFR/LFR image generation unit 9 first executes HFR region specifying processing in step S202. That is, the processing for specifying the region to be the HFR image in the entire region of the captured image is executed, and specifically, in the present example, processing for specifying the detection region Ad of the object as a moving object is performed. Note that an example of the method of detecting a region of an object as a moving object has already been described, and thus redundant description is avoided.

In step S203 subsequent to step S202, the HFR/LFR image generation unit 9 performs region instruction information generation processing. That is, the region instruction information giving an instruction on the display regions of the HFR image and the LFR image is generated, setting the image of the detection region Ad specified in step S202 as the HFR image, and the image of the region other than the detection region Ad as the LFR image (see Figs. 4C and 5). Then, in subsequent step S204, the HFR/LFR image generation unit 9 outputs the generated region instruction information to the display unit 11.

In step S205 subsequent to step S204, the HFR/LFR image generation unit 9 performs output processing for a frame image of the LFR image. That is, the image of the region other than the detection region Ad in the frame image of the captured image data is output to the display unit 11 as a frame image of the LFR image.

Then, in step S206 subsequent to step S205, the HFR/LFR image generation unit 9 performs processing of outputting the image of the detection region Ad in the frame image of the captured image data to the display unit 11 as a frame image of the HFR image as the output processing for a frame image of the HFR image.

By the above-described processing, the image of the detection region Ad is output at the HFR while the image of the region other than the detection region Ad is output as the LFR, to the display unit 11. Then, the region instruction information is output to the display unit 11 in this case at each frame update timing of the LFR image, and the display unit 11 combines the HFR image and the LFR image on the basis of the region instruction information and displays the combined image.

### [1-4. Countermeasures Against Movement of Object]

Here, the object may move in the image. In the case of adopting the method of specifying the HFR region (region detection of the specific object) at the frame update timing of the LFR image as described above, there is a possibility that the object will be framed out the detection region Ad before the next specific object region detection is performed if the movement of the object is fast.

Therefore, it is effective to widely set the detection region Ad with a margin.

Alternatively, by performing the specific object region detection not with the frame period of the LFR image but with the frame period of the HFR image, the followability to the moving specific object can be improved.

Note that, in the case of performing the specific object region detection with the frame period of the HFR image, the image of the portion to be the background where the object has been present before movement becomes not present on the LFR image side (the image is not present until the next LFR image frame update) with the movement of the detection region Ad (movement of the HFR region) according to the movement of the specific object, and therefore image defect occurs in the combined image.

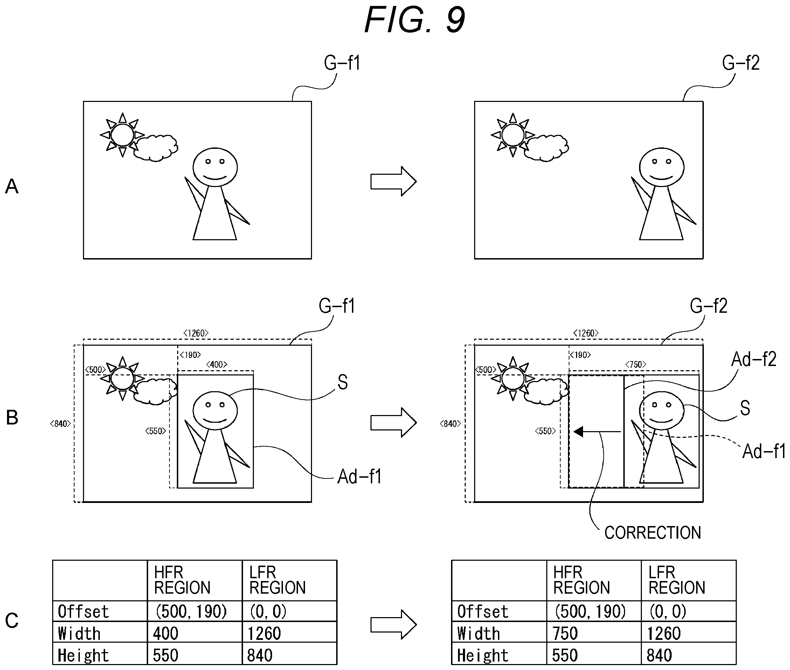

Therefore, as illustrated in Fig. 9, the HFR region can be enlarged according to the movement of the specific object.

In Fig. 9, Fig. 9A illustrates an example of movement of a specific object S from a certain frame image G-f1 to a next frame image G-f2 of the captured image.

Fig. 9B illustrates a detection region Ad-f1 of the specific object S in the frame image G-f1 and a detection region Ad-f2 of the specific object S in the frame image G-f2. In the case where the detection region Ad is updated with the frame period of the HFR image, the LFR image remains as the image of the region excluding the detection region Ad-f1 from the frame image G-f1 until the frame update of the LFR image is performed, whereas the HFR region is updated to the detection region Ad-f2 and thus the image becomes not present in the portion of the detection region Ad-f1, the portion not overlapping with the detection region Ad-f2.

Therefore, the range of the detection region Ad-f2 is corrected to be enlarged to a range covering the entire detection region Ad-f1. That is, in a case where movement of the specific object S is detected from a previous frame in the HFR image, correction to enlarge the detection region Ad in the current frame to the range covering the entire detection region Ad in the previous frame is performed.

Note that, since the LFR region is updated according to the detection region Ad (that is, the HFR region) in the frame corresponding to the frame update timing of the LFR image among the frames of the HFR image, it is not necessary to correct the detection region Ad as described above in the frame.

Fig. 9C illustrates an example of the region instruction information corresponding to the frame image G-f1 and an example of the region instruction information corresponding to the frame image G-f2. Comparing these pieces of region instruction information, it can be seen that the HFR region is set as a region including not only the detection region Ad-f2 but also the entire detection region Ad-f1 according to the movement of the specific object S.

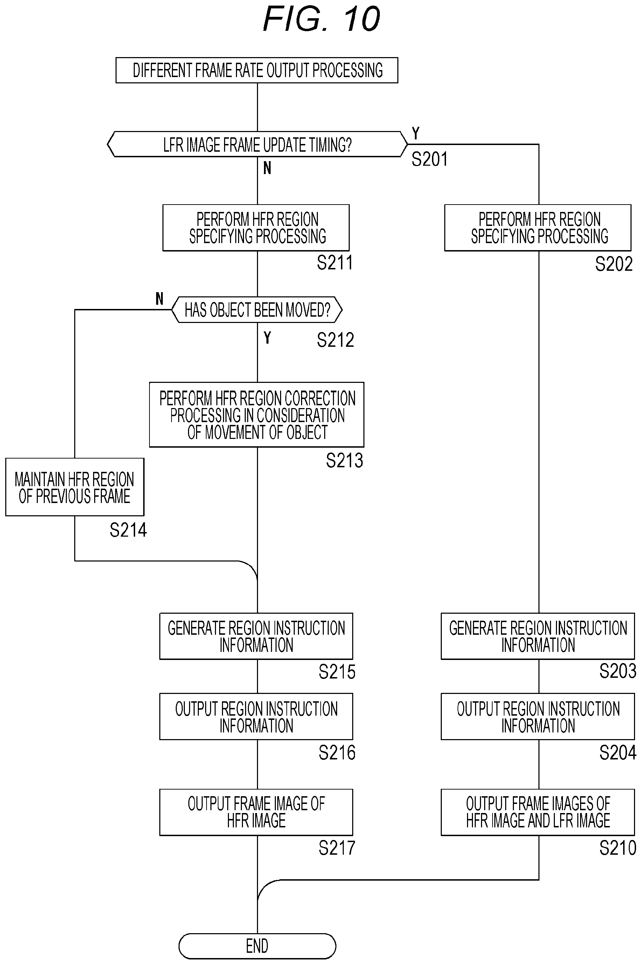

The flowchart of Fig. 10 illustrates the different frame rate output processing corresponding to the case of correcting the detection region Ad according to the movement of the object as described above. Note that the different frame rate output processing in this case is also processing repeatedly executed for each frame of the HFR image.

Also in this case, first in step S201, the HFR/LFR image generation unit 9 determines whether or not it is the frame update timing of the LFR image, and executes the processing from step S202 to step S204 in the case of the frame update timing of the LFR image. That is, similarly to the processing of Fig. 8, in the case of the frame update timing of the LFR image, the HFR region specifying processing (S202: region detection of the specific object S as a moving object in the present example), the region instruction information generation processing based on the specified HFR region (detection region Ad in the present example) (S203), and the output processing (S204) are performed. Then, upon execution of the output processing in step S204, the HFR/LFR image generation unit 9 executes processing of outputting the frame images of the HFR image and the LFR image to the display unit 11 in step S210 and terminates the series of processing illustrated in Fig. 10.

Meanwhile, in a case where it is determined in step S201 that it is not the frame update timing of the LFR image, the HFR/LFR image generation unit 9 executes the HFR region specifying processing, that is, the region detection processing for the specific object S as a moving object in step S211, and determines in subsequent step S212 whether or not the object has moved. That is, the position of the specific object S detected in the processing of step S211 for the current frame is compared with the position of the specific object S detected in the HFR region specifying processing (S211 or S202) executed for the previous frame, and whether or not the specific object S has moved is determined.

In a case where it is determined that the object has moved, the HFR/LFR image generation unit 9 executes correction processing for the HFR region in consideration of the movement of the object in step S213. That is, as illustrated in Fig. 9, the detection region Ad in the current frame is enlarged to the range covering the entire detection region Ad in the previous frame, and the enlarged region is set as the HFR region.

Meanwhile, in a case where it is determined that the object has not moved, the HFR/LFR image generation unit 9 maintains the HFR region of the previous frame in step S214. That is, the HFR region of the current frame is set to the same region as the HFR region set in the previous frame (the corrected HFR region in a case where the correction has been performed in the previous frame).

In response to the execution of the processing of step S213 or S214, the HFR/LFR image generation unit 9 performs the region instruction information generation processing in step S215. That is, the region instruction information giving an instruction on the display regions of the HFR image and the LFR image is generated on the basis of the HFR region set in step S213 or S214. Then, the HFR/LFR image generation unit 9 executes output processing for the generated region instruction information in subsequent step S216 and further executes output processing for the frame image of the HFR image in subsequent step S217, and terminates the series of processing illustrated in Fig. 10.

### [1-5. Modification]

Here, the above description has been made on the assumption that the HFR and the LFR each have a constant rate, but at least one of the HFR and the LFR may have a variable rate. In particular, in the case of using the OSD as the LFR image, it is conceivable to vary the frame rate of the OSD image.

For example, when there is no change in the content of the notification information I in the OSD image, there is no problem in the notification function even if the same image is continuously displayed. Therefore, in the case of outputting the OSD image as the LFR image, the frame update of the OSD image can be executed at the update timing of the notification information I. In this case, the control unit 4 determines whether or not to update the information content of each piece of the notification information I such as the imaging mode notification information I1, the remaining battery level notification information 12, and the shutter speed notification information 13, and causes the OSD image generation unit 10 to update the OSD image and causes the display unit 11 to output the OSD image when the control unit 4 determines to update the information content of any piece of the notification information I.

In this way, by updating the frame of the OSD image as the LFR image at the update timing of the notification information I, the transmission amount of the LFR image can be reduced, and the bandwidth and power consumption related to the image transmission can be reduced.

Furthermore, in the above description, an example has been described in which the entire region of the captured image is the HFR region in the OSD display mode. However, even in the OSD display mode, an image divided into the HFR region and the LFR region can be output for the captured image. Specifically, for example, regarding the captured image to be displayed in the display region inside the OSD image, an image in which the detection region Ad of the specific object S is the HFR region and the region other than the detection region Ad is the LFR region is output.

### <2. Second Embodiment>

Next, a second embodiment will be described.

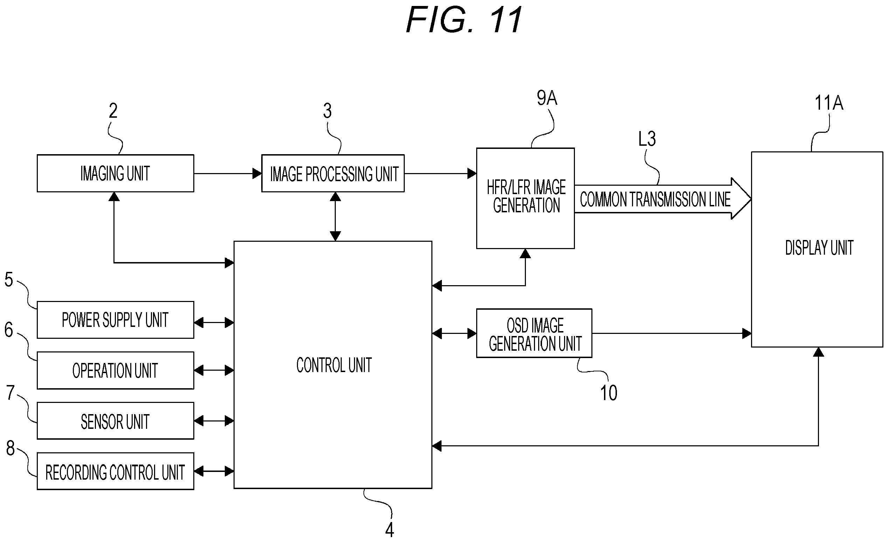

Fig. 11 is a block diagram illustrating an internal configuration example of an imaging device 1A as a second embodiment.

Note that, in the following description, the same reference numerals are given to portions similar to those already described, and description thereof is omitted.

In the second embodiment, an HFR image and an LFR image are time-divisionally output to a single transmission line.

The imaging device 1A is different from the imaging device 1 in that an HFR/LFR image generation unit 9A is provided instead of the HFR/LFR image generation unit 9, a display unit 11A is provided instead of the display unit 11, and a common transmission line L3 is provided instead of omitting the H transmission line L1 and the L transmission line L2.

The HFR/LFR image generation unit 9A time-divisionally outputs the HFR image and the LFR image generated on the basis of captured image data input via an image processing unit 3 to the common transmission line L3.

The display unit 11A combines and displays the HFR image and the LFR image input via the common transmission line L3.

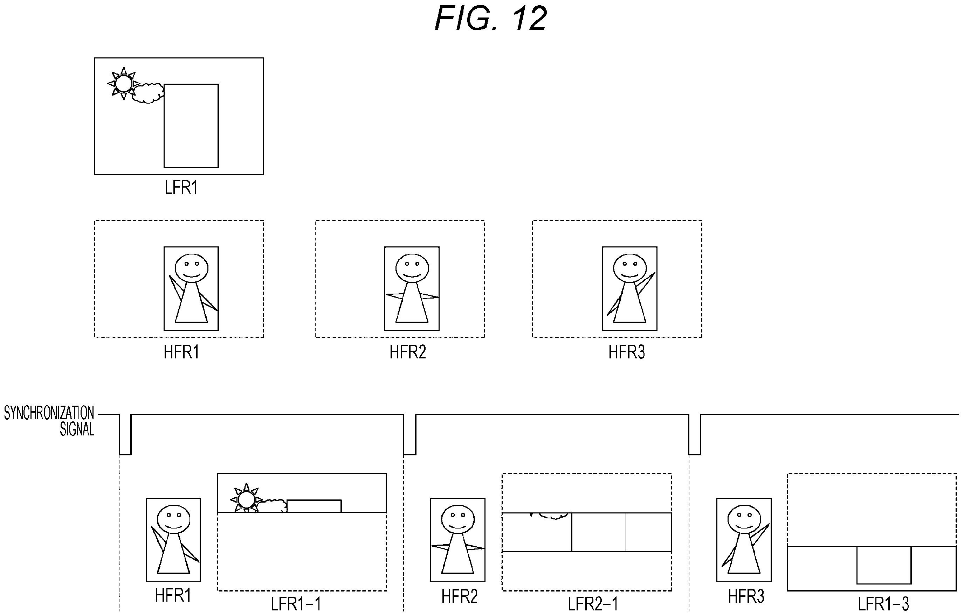

Here, various methods of time-divisionally outputting the HFR image and the LFR image to the single transmission line are conceivable, but an example will be described with reference to Fig. 12.

Here, it is assumed that an LFR is a frame rate of 1/3 of an HFR.

As illustrated in Fig. 12A, in this case, three frame images of the HFR image are transmitted ("HFR1", "HFR2", and "HFR3" in the drawing) for one frame image ("LFR1" in the drawing) of the LFR image.

Note that, hereinafter, the frame image of the LFR image is referred to as an "LFR frame image", and the frame image of the HFR image is referred to as an "HFR frame image".

At this time, to make a data transmission amount per unit time constant, the LFR frame image is divided into three regions, and images of the first region, the second region, and the third region obtained by the region division are time-divisionally output to the common transmission line L3 together with the HFR frame image (see Fig. 12B).

Specifically, when the three HFR frame images corresponding to one LFR frame image are a first HFR frame image (HFR1), a second HFR frame image (HFR2), and a third HFR frame image (HFR3) in order from a leading side on a time axis, "a set of the first HFR frame image and an image (LFR1-1) of the first region of the LFR frame image", "a set of the second HFR frame image and an image (LFR1-2) of the second region of the LFR frame image", and "a set of the third HFR frame image and an image (LFR1-3) of the third region of the LFR frame image" are sequentially output to the common transmission line L3. Note that, at this time, the output of each set of images is performed according to a synchronization signal related to transmission.

As a result, the HFR image is output to the display unit 11A at the frame rate three times the LFR image.

As different frame rate output processing, the HFR/LFR image generation unit 9A performs the above-described region division for each LFR frame image and the time-division output of the set of the image of each region and the HFR frame image to the common transmission line L3.

Furthermore, the HFR/LFR image generation unit 9A outputs region instruction information giving an instruction on display regions of the HFR image and the LFR image to the display unit 11A via the common transmission line L3. In a case of detecting a region of a specific object S with a frame period of the LFR image as illustrated in Fig. 8, the region instruction information in this case is updated at each frame update timing of the LFR image. Alternatively, in a case of detecting the region of the specific object S with a frame period of the HFR image as illustrated in Fig. 10, the region instruction information is updated at each frame update timing of the HFR image.

The display unit 11A reproduces the LFR frame image from the time-divisionally output images of the regions of the LFR frame image, sequentially combines the reproduced LFR frame image with the first, second, and third HFR frame images, and sequentially displays each combined image.

Note that, in the above description, an example in which the region division of the LFR frame image is performed by lateral division (division in which a division line is parallel to the lateral direction) has been described; however, the specific method of the region division is not particularly limited, and for example, the region division can be performed in a longitudinal direction.

Furthermore, it is not essential to equally divide the LFR frame image and it is also possible to non-equally divide the LFR frame image.

Furthermore, even in the case of performing the time-division output to the single transmission line as described above, it is of course possible to correct the HFR region in consideration of movement of the specific object S.

Moreover, the method of time-divisionally outputting the HFR image and the LFR image to the single transmission line can also be suitably applied to a case where the OSD image is the LFR image.

### <3. Third Embodiment>

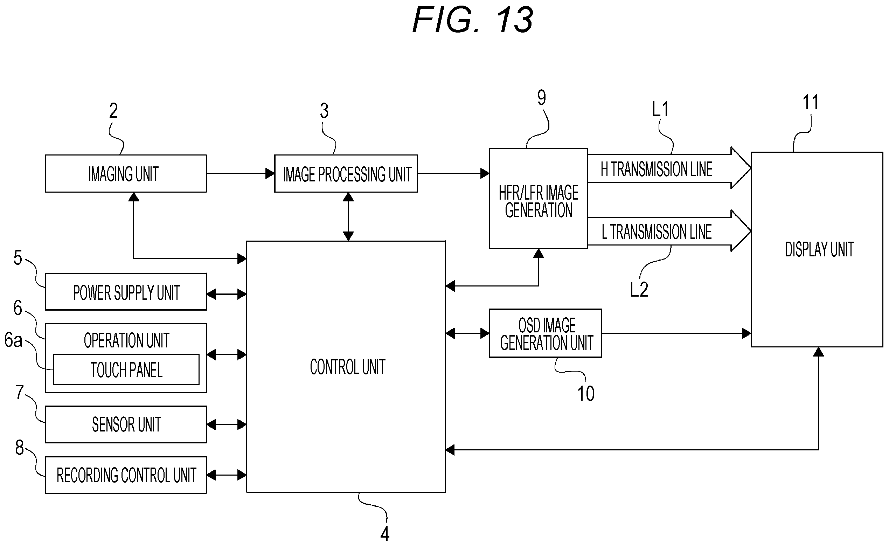

Fig. 13 is a block diagram illustrating an internal configuration example of an imaging device 1B as a third embodiment.

As illustrated, in the imaging device 1B, a touch panel 6a is provided in an operation unit 6. The touch panel 6a detects a touch operation on a display screen (hereinafter referred to as "display screen 11a") on a display unit 11.

In the imaging device 1B as the third embodiment, an HFR region is set on the basis of an operation of designating a position on the display screen 11a. Specifically, the HFR region is set on the basis of the touch operation on the display screen 11a.

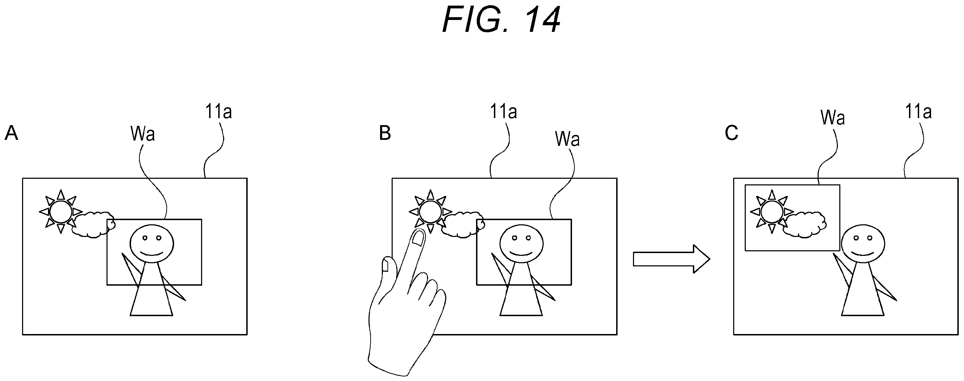

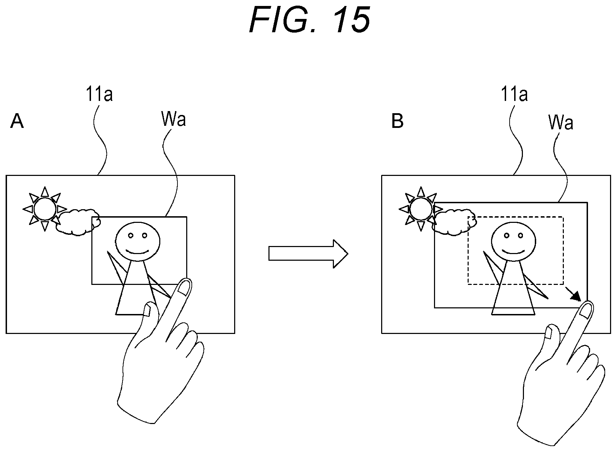

A setting example of the HFR region in the third embodiment will be described with reference to Figs. 14 and 15.

Fig. 14 illustrates an example of changing the position of the HFR region according to the touch operation.

Fig. 14A illustrates a state in which a detection region Ad of a specific object S is the HFR region. In the present example, a region frame Wa indicating the position and range (size) of the HFR region is displayed on the display screen 11a. A control unit 4 instructs the display unit 11 to display the region frame Wa.

In the state illustrated in Fig. 14A, it is assumed that a user touches an arbitrary position on the display screen 11a as illustrated in Fig. 14B.

In response to this touch operation, as illustrated in Fig. 14C, the position of the HFR region indicated by region frame Wa is changed to a position corresponding to the touched position.

The position of the HFR region is changed according to the touch operation as described above on the basis of control of the control unit 4. Specifically, in response to the touch operation on the display screen 11a, the control unit 4 gives an instruction on the position of the HFR region according to the touch position to an HFR/LFR image generation unit 9. In this case, the HFR/LFR image generation unit 9 sets the position of the HFR region to the position on which the instruction is given, and generates and outputs the HFR image and the LFR image.

Fig. 15 illustrates an example of changing a range of the HFR region according to the touch operation.

In this example, as illustrated as a transition from Fig. 15A to Fig. 15B, the range of the HFR region is enlarged (or reduced) in response to an operation of tracing the display screen 11a with a touched finger from a state where the region frame Wa is touched. For example, as illustrated in Fig. 15B, the range of the HFR region is enlarged according to a tracing operation in a direction of widening the region frame Wa outward, and conversely, the range of the HFR region is reduced according to a tracing operation in a direction of narrowing the region frame Wa inward.

Note that the tracing operation can be rephrased as an operation of giving an instruction on a direction in a plane of the display screen 11a.

The change of the range of the HFR region as described above is performed on the basis of the control of the control unit 4. Specifically, the control unit 4 gives an instruction on range designation information of the HFR region determined according to the tracing direction and a tracing amount to the HFR/LFR image generation unit 9, in response to the operation of tracing the display screen 11a with the touched finger from the state where the operation of touching the display region of the region frame Wa is performed. The HFR/LFR image generation unit 9 sets the range of the HFR region according to the range designation information, and generates and outputs the HFR image and the LFR image.

Note that, in the above description, regarding the setting of the position of the HFR region, an example of changing the already set position of the HFR region has been described; however, the HFR region can also be set at a position corresponding to a designated position in response to a position designation operation performed in a state where the HFR region is not set.

### <4. Modification>

Here, the embodiment is not limited to the specific examples exemplified above, and various modifications are conceivable.

For example, in the above description, an example in which the operation of designating the position and range of the HFR region is performed as a touch operation on the display screen 11a has been described; however, instead, an operation using a pointer such as a cursor displayed on the display screen 11a can be performed. For example, the position designation operation may be an operation of pressing a predetermined button in a state where the pointer is located at a desired position. At this time, for example, a displacement instruction operator such as a cross key can give an instruction on the displacement of the pointer on the display screen 11a. Furthermore, the range designation operation may be, for example, an operation of displacing the pointer by the displacement instruction operator while pressing a predetermined button in a state where the pointer is located in the display region of the region frame Wa.

Furthermore, in the above description, an example in which the image generation unit (F1) that generates the HFR image and the LFR image, the output unit (F2) that outputs the HFR image and the LFR image, and the display unit (F3) that combines and displays the HFR image and the LFR image are provided in the same device as the imaging device has been described, but it is also possible to adopt a configuration in which the image generation unit, the output unit, and the display unit are provided in separate devices.

### <5. Application>

The technology according to the present disclosure can be applied to various products. For example, the technology according to the present disclosure may be applied to an operating room system.

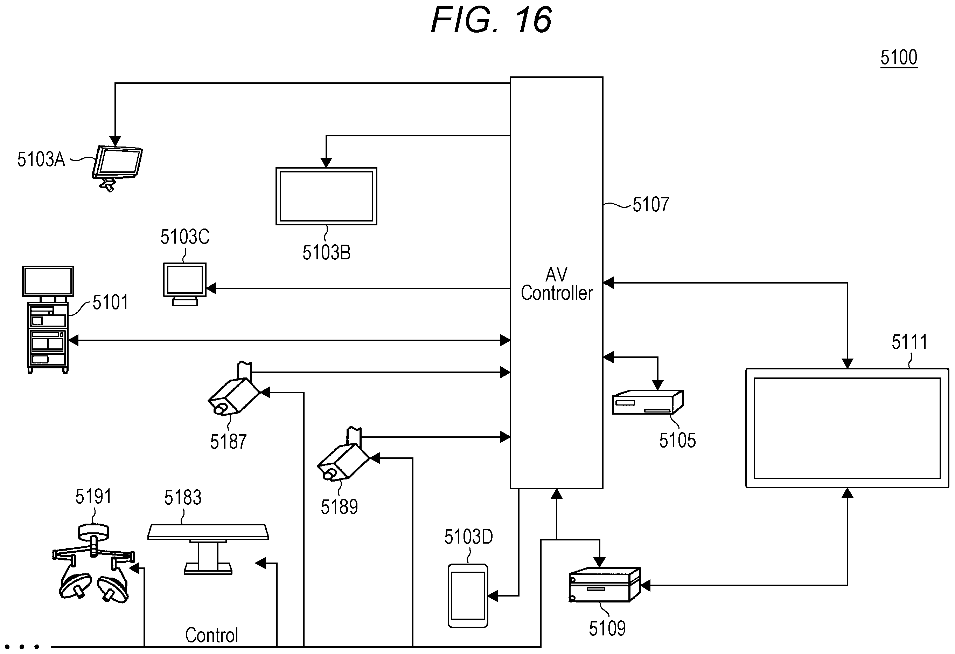

Fig. 16 is a diagram schematically illustrating an overall configuration of an operating room system 5100 to which the technology according to the present disclosure is applicable. Referring to Fig. 16, the operating room system 5100 is configured such that devices installed in an operating room are connected to be able to cooperate with each other via an audiovisual controller (AV controller) 5107 and an operating room control device 5109.

Various devices can be installed in the operating room. Fig. 16 illustrates, as an example, a group of various devices 5101 for endoscopic surgery, a ceiling camera 5187 provided on a ceiling of the operating room and imaging the hand of an operator, a surgical field camera 5189 provided on the ceiling of the operating room and imaging an entire state of the operating room, a plurality of display devices 5103A to 5103D, a recorder 5105, a patient bed 5183, and an illumination 5191.

Here, among these devices, the group of devices 5101 belongs to an endoscopic surgical system 5113 described below and includes an endoscope, a display device that displays an image imaged by the endoscope, and the like. Each device belonging to the endoscopic surgical system 5113 is also referred to as a medical device. Meanwhile, the display devices 5103A to 5103D, the recorder 5105, the patient bed 5183, and the illumination 5191 are devices provided in, for example, the operating room separately from the endoscopic surgical system 5113. Each device not belonging to the endoscopic surgical system 5113 is referred to as a non-medical device. The audiovisual controller 5107 and/or the operating room control device 5109 controls the medical devices and the non-medical devices in cooperation with each other.

The audiovisual controller 5107 centrally controls processing relating to image display in the medical devices and the non-medical devices. Specifically, among the devices included in the operating room system 5100, the group of devices 5101, the ceiling camera 5187, and the surgical field camera 5189 can be devices (hereinafter, also referred to as devices at the transmission source) having a function to transmit information to be displayed during a surgical operation (hereinafter the information is also referred to as display information). Furthermore, the display devices 5103A to 5103D can be devices (hereinafter, also referred to as devices at the output destination) to which the display information is output. Furthermore, the recorder 5105 can be a device corresponding to both the device at the transmission source and the device at the output destination. The audiovisual controller 5107 has functions to control the operation of the devices at the transmission source and the devices at the output destination, acquire the display information from the devices at the transmission source, transmit the display information to the devices at the output destination, and display or record the display information. Note that the display information is various images imaged during the surgical operation, various types of information regarding the surgical operation (for example, physical information of a patient, information of a past examination result, information of an operation method, and the like), and the like.

Specifically, information regarding an image of an operation site in a patient's body cavity imaged by the endoscope can be transmitted from the group of devices 5101 to the audiovisual controller 5107 as the display information. Furthermore, information regarding an image of the operator's hand imaged by the ceiling camera 5187 can be transmitted from the ceiling camera 5187 as the display information. Furthermore, information regarding an image illustrating the state of the entire operating room imaged by the surgical field camera 5189 can be transmitted from the surgical field camera 5189 as the display information. Note that, in a case where another device having an imaging function exists in the operating room system 5100, the audiovisual controller 5107 may acquire information regarding an image imaged by the another device from the another device as the display information.

Alternatively, for example, information regarding these images imaged in the past is recorded in the recorder 5105 by the audiovisual controller 5107. The audiovisual controller 5107 can acquire the information regarding the images imaged in the past from the recorder 5105 as the display information. Note that the recorder 5105 may also record various types of information regarding the surgical operation in advance.

The audiovisual controller 5107 causes at least any of the display devices 5103A to 5103D as the devices at the output destination to display the acquired display information (in other words, the image imaged during the surgical operation and the various types of information regarding the surgical operation). In the illustrated example, the display device 5103A is a display device suspended and installed from the ceiling of the operating room, the display device 5103B is a display device installed on a wall of the operating room, the display device 5103C is a display device installed on a desk in the operating room, and the display device 5103D is a mobile device (for example, a tablet personal computer (PC)) having a display function.

Furthermore, although illustration is omitted in Fig. 16, the operating room system 5100 may include a device outside the operating room. The device outside the operating room can be, for example, a server connected to a network built inside or outside a hospital, a PC used by a medical staff, a projector installed in a conference room of the hospital, or the like. In a case where such an external device is outside the hospital, the audiovisual controller 5107 can also cause a display device of another hospital to display the display information via a video conference system or the like for remote medical care.

The operating room control device 5109 centrally controls processing other than the processing regarding the image display in the non-medical devices. For example, the operating room control device 5109 controls the driving of the patient bed 5183, the ceiling camera 5187, the surgical field camera 5189, and the illumination 5191.

The operating room system 5100 is provided with a centralized operation panel 5111, and the user can give an instruction regarding the image display to the audiovisual controller 5107 and can give an instruction regarding the operation of the non-medical devices to the operating room control device 5109, through the centralized operation panel 5111. The centralized operation panel 5111 is provided with a touch panel on a display surface of the display device.

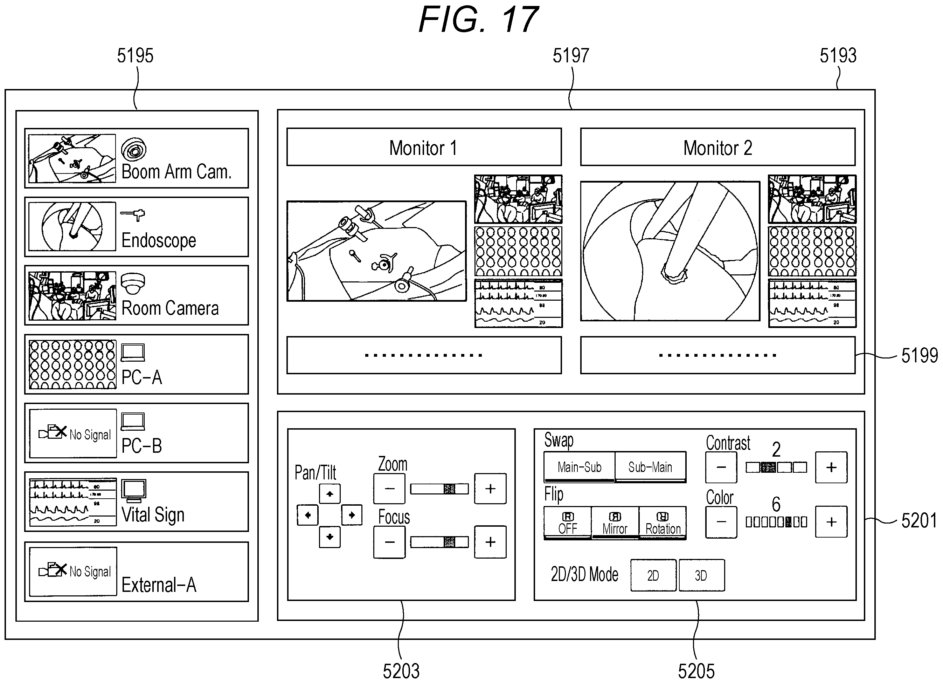

Fig. 17 is a diagram illustrating a display example of an operation screen on the centralized operation panel 5111. Fig. 17 illustrates, as an example, an operation screen corresponding to a case where two display devices are provided in the operating room system 5100 as the devices at the output destination. Referring to Fig. 17, an operation screen 5193 is provided with a transmission source selection region 5195, a preview region 5197, and a control region 5201.

The transmission source selection region 5195 displays a transmission source device provided in the operating room system 5100 and a thumbnail screen representing the display information held by the transmission source device in association with each other. The user can select the display information to be displayed on the display device from any of the transmission source devices displayed in the transmission source selection region 5195.

The preview region 5197 displays a preview of screens displayed on two display devices (Monitor1 and Monitor2) that are the devices at the output destination. In the illustrated example, four images are displayed in PinP on one display device. The four images correspond to the display information transmitted from the transmission source device selected in the transmission source selection region 5195. One of the four images is displayed relatively large as a main image, and the remaining three images are displayed relatively small as sub-images. The user can switch the main image and a sub-image by appropriately selecting regions where the four images are displayed. Furthermore, a status display region 5199 is provided below the regions where the four images are displayed, and the status regarding the surgical operation (for example, an elapsed time of the surgical operation, the patient's physical information, and the like) is appropriately displayed in the region.

The control region 5201 is provided with a transmission source operation region 5203 in which a graphical user interface (GUI) component for operating the device at the transmission source is displayed, and an output destination operation region 5205 in which a GUI component for operating the device at the output destination is displayed. In the illustrated example, the transmission source operation region 5203 is provided with GUI components for performing various operations (pan, tilt, and zoom) of the camera in the device at the transmission source having an imaging function. The user can operate the operation of the camera in the device at the transmission source by appropriately selecting these GUI components. Note that, although illustration is omitted, in a case where the device at the transmission source selected in the transmission source selection region 5195 is a recorder (in other words, in a case where the image recorded in the past in the recorder is displayed in the preview region 5197), the transmission source operation region 5203 can be provided with GUI components for performing operations such as reproduction, stop of reproduction, rewind, and fast forward, of the image.

Furthermore, the output destination operation region 5205 is provided with GUI components for performing various operations (swap, flip, color adjustment, contrast adjustment, and switching between 2D display and 3D display) for the display in the display device that is the device at the output destination. The user can operate the display in the display device by appropriately selecting these GUI components.

Note that the operation screen displayed on the centralized operation panel 5111 is not limited to the illustrated example, and the user may be able to perform operation input to devices that can be controlled by the audiovisual controller 5107 and the operating room control device 5109 provided in the operating room system 5100, via the centralized operation panel 5111.

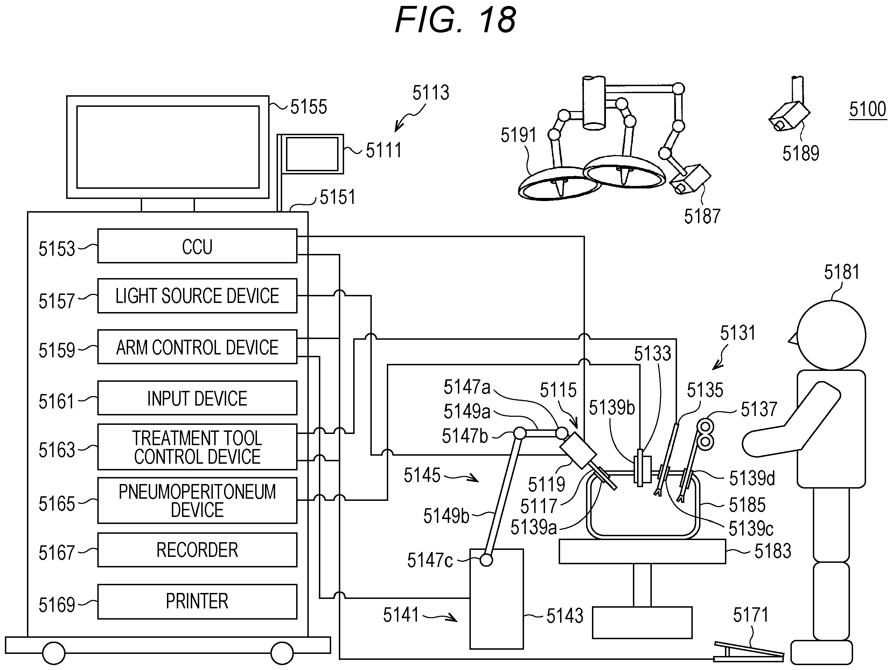

Fig. 18 is a diagram illustrating an example of a state of a surgical operation to which the above-described operating room system is applied. The ceiling camera 5187 and the surgical field camera 5189 are provided on the ceiling of the operating room and can image the hand of an operator (surgeon) 5181 who performs treatment for an affected part of a patient 5185 on the patient bed 5183 and the state of the entire operating room. The ceiling camera 5187 and the surgical field camera 5189 can be provided with a magnification adjustment function, a focal length adjustment function, an imaging direction adjustment function, and the like. The illumination 5191 is provided on the ceiling of the operating room and illuminates at least the hand of an operator 5181. The illumination 5191 may be able to appropriately adjust an irradiation light amount, a wavelength (color) of irradiation light, an irradiation direction of the light, and the like.

The endoscopic surgical system 5113, the patient bed 5183, the ceiling camera 5187, the surgical field camera 5189, and the illumination 5191 are connected in cooperation with each other via the audiovisual controller 5107 and the operating room control device 5109 (not illustrated in Fig. 18), as illustrated in Fig. 16. The centralized operation panel 5111 is provided in the operating room, and as described above, the user can appropriately operate these devices present in the operating room via the centralized operation panel 5111.

Hereinafter, a configuration of the endoscopic surgical system 5113 will be described in detail. As illustrated, the endoscopic surgical system 5113 includes an endoscope 5115, other surgical tools 5131, a support arm device 5141 that supports the endoscope 5115, and a cart 5151 in which various devices for endoscopic surgery are mounted.

In endoscopic surgery, a plurality of cylindrical puncture devices called trocars 5139a to 5139d is punctured into an abdominal wall instead of cutting the abdominal wall to open the abdomen. Then, a lens barrel 5117 of the endoscope 5115 and other surgical tools 5131 are inserted into a body cavity of the patient 5185 through the trocars 5139a to 5139d. In the illustrated example, as the other surgical tools 5131, a pneumoperitoneum tube 5133, an energy treatment tool 5135, and a pair of forceps 5137 are inserted into the body cavity of the patient 5185. Furthermore, the energy treatment tool 5135 is a treatment tool for performing incision and detachment of tissue, sealing of a blood vessel, and the like with a high-frequency current or an ultrasonic vibration. Note that the illustrated surgical tools 5131 are mere examples, and various kinds of surgical tools typically used in the endoscopic surgery such as tweezers, a retractor, and the like may be used as the surgical tools 5131.

An image of an operation site in the body cavity of the patient 5185 imaged by the endoscope 5115 is displayed on a display device 5155. The operator 5181 performs treatment such as removal of an affected part, using the energy treatment tool 5135 and the forceps 5137 while viewing the image of the operation site displayed on the display device 5155 in real time. Note that, although illustration is omitted, the pneumoperitoneum tube 5133, the energy treatment tool 5135, and the forceps 5137 are supported by the operator 5181, an assistant, or the like during the surgical operation.

### (Support Arm Device)

The support arm device 5141 includes an arm unit 5145 extending from a base unit 5143. In the illustrated example, the arm unit 5145 includes joint portions 5147a, 5147b, and 5147c, and links 5149a and 5149b, and is driven under the control of an arm control device 5159. The endoscope 5115 is supported by the arm unit 5145, and the position and posture of the endoscope 5115 are controlled. With the control, stable fixation of the position of the endoscope 5115 can be implemented.

### (Endoscope)

The endoscope 5115 includes the lens barrel 5117 having a region with a predetermined length from a distal end inserted into the body cavity of the patient 5185, and a camera head 5119 connected to a proximal end of the lens barrel 5117. In the illustrated example, the endoscope 5115 configured as a so-called hard endoscope including the hard lens barrel 5117 is illustrated. However, the endoscope 5115 may be configured as a so-called soft endoscope including the soft lens barrel 5117.

The distal end of the lens barrel 5117 is provided with an opening in which an object lens is fit. A light source device 5157 is connected to the endoscope 5115, and light generated by the light source device 5157 is guided to the distal end of the lens barrel by a light guide extending inside the lens barrel 5117 and an object to be observed in the body cavity of the patient 5185 is irradiated with the light through the object lens. Note that the endoscope 5115 may be a forward-viewing endoscope, may be an oblique-viewing endoscope, or may be a side-viewing endoscope.

An optical system and an imaging element are provided inside the camera head 5119, and reflected light (observation light) from the object to be observed is condensed to the imaging element by the optical system. The observation light is photoelectrically converted by the imaging element, and an electrical signal corresponding to the observation light, that is, an image signal corresponding to an observed image is generated. The image signal is transmitted to a camera control unit (CCU) 5153 as raw data. Note that the camera head 5119 has a function to adjust magnification and a focal length by appropriately driving the optical system.

Note that, for example, to cope with stereoscopic view (3D display) or the like, a plurality of imaging elements may be provided in the camera head 5119. In this case, a plurality of relay optical systems is provided inside the lens barrel 5117 to guide the observation light to each of the plurality of imaging elements.

### (Various Devices Mounted in Cart)

The CCU 5153 includes a central processing unit (CPU), a graphics processing unit (GPU), and the like, and centrally controls the operations of the endoscope 5115 and the display device 5155. Specifically, the CCU 5153 applies various types of image processing for displaying an image based on the image signal, such as developing processing (demosaic processing), to the image signal received from the camera head 5119. The CCU 5153 provides the image signal to which the image processing has been applied to the display device 5155. Furthermore, the audiovisual controller 5107 illustrated in Fig. 16 is connected to the CCU 5153. The CCU 5153 also supplies the image signal to which the image processing has been applied to the audiovisual controller 5107. Furthermore, the CCU 5153 transmits a control signal to the camera head 5119 to control its driving. The control signal may include information regarding imaging conditions such as the magnification and focal length. The information regarding imaging conditions may be input via an input device 5161 or may be input via the above-described centralized operation panel 5111.

The display device 5155 displays the image based on the image signal to which the image processing has been applied by the CCU 5153 under the control of the CCU 5153. In a case where the endoscope 5115 supports high-resolution imaging such as 4K (horizontal pixel number 3840 × vertical pixel number 2160) or 8K (horizontal pixel number 7680 × vertical pixel number 4320) and/or in a case where the endoscope 5115 supports 3D display, for example, the display device 5155, which can perform high-resolution display and/or 3D display, can be used corresponding to each case. In the case where the endoscope 5115 supports the high-resolution imaging such as 4K or 8K, a greater sense of immersion can be obtained by use of the display device 5155 with the size of 55 inches or more. Furthermore, a plurality of display devices 5155 having different resolutions and sizes may be provided depending on the use.

The light source device 5157 includes a light source such as a light emitting diode (LED), for example, and supplies irradiation light to the endoscope 5115 in imaging an operation site.

The arm control device 5159 includes a processor such as a CPU, and operates according to a predetermined program, thereby controlling driving of the arm unit 5145 of the support arm device 5141 according to a predetermined control method.

The input device 5161 is an input interface for the endoscopic surgical system 5113. The user can input various types of information and instructions to the endoscopic surgical system 5113 via the input device 5161. For example, the user inputs various types of information regarding the surgical operation, such as the patient's physical information and the information regarding an operation method of the surgical operation via the input device 5161. Furthermore, for example, the user inputs an instruction to drive the arm unit 5145, an instruction to change the imaging conditions (such as the type of the irradiation light, the magnification, and the focal length) of the endoscope 5115, an instruction to drive the energy treatment tool 5135, or the like via the input device 5161.

The type of the input device 5161 is not limited, and the input device 5161 may be one of various known input devices. For example, a mouse, a keyboard, a touch panel, a switch, a foot switch 5171, a lever, and/or the like can be applied to the input device 5161. In the case where a touch panel is used as the input device 5161, the touch panel may be provided on a display surface of the display device 5155.

Alternatively, the input device 5161 is, for example, a device worn by the user, such as a glass-type wearable device or a head mounted display (HMD), and various inputs are performed according to a gesture or a line-of-sight of the user detected by the device. Furthermore, the input device 5161 includes a camera capable of detecting a movement of the user, and various inputs are performed according to a gesture or a line-of-sight of the user detected from an image imaged by the camera. Moreover, the input device 5161 includes a microphone capable of collecting a voice of the user, and various inputs are performed by a sound through the microphone. The input device 5161 is configured to be able to input various types of information in a non-contact manner, as described above, so that the user (for example, the operator 5181) in particular belonging to a clear region can operate a device belonging to a filthy region in a non-contact manner. Furthermore, since the user can operate the device without releasing his/her hand from the possessed surgical tool, the user's convenience is improved.

A treatment tool control device 5163 controls driving of the energy treatment tool 5135 for cauterization and incision of tissue, sealing of a blood vessel, and the like. A pneumoperitoneum device 5165 sends a gas into the body cavity of the patient 5185 through the pneumoperitoneum tube 5133 to expand the body cavity for the purpose of securing a field of vision by the endoscope 5115 and a work space for the operator. A recorder 5167 is a device that can record various types of information regarding the surgical operation. A printer 5169 is a device that can print the various types of information regarding the surgery in various formats such as a text, an image, or a graph.

Hereinafter, a particularly characteristic configuration in the endoscopic surgical system 5113 will be further described in detail.

### (Support Arm Device)

The support arm device 5141 includes the base unit 5143 as a base and the arm unit 5145 extending from the base unit 5143. In the illustrated example, the arm unit 5145 includes the plurality of joint portions 5147a, 5147b, and 5147c, and the plurality of links 5149a and 5149b connected by the joint portion 5147b. However, Fig. 18 illustrates a simplified configuration of the arm unit 5145 for simplification. In reality, the shapes, the number, and the arrangement of the joint portions 5147a to 5147c and the links 5149a and 5149b, directions of rotation axes of the joint portions 5147a to 5147c, and the like can be appropriately set so that the arm unit 5145 has a desired degree of freedom. For example, the arm unit 5145 can favorably have six degrees of freedom or more. With the configuration, the endoscope 5115 can be freely moved within a movable range of the arm unit 5145. Therefore, the lens barrel 5117 of the endoscope 5115 can be inserted from a desired direction into the body cavity of the patient 5185.

Actuators are provided in the joint portions 5147a to 5147c, and the joint portions 5147a to 5147c are configured to be rotatable around predetermined rotation axes by driving of the actuators. The driving of the actuators is controlled by the arm control device 5159, so that rotation angles of the joint portions 5147a to 5147c are controlled and driving of the arm unit 5145 is controlled. With the control, control of the position and posture of the endoscope 5115 can be implemented. At this time, the arm control device 5159 can control the driving of the arm unit 5145 by various known control methods such as force control or position control.

For example, by the operator 5181 appropriately performing an operation input via the input device 5161 (including a foot switch 5171), the driving of the arm unit 5145 may be appropriately controlled by the arm control device 5159 according to the operation input, and the position and posture of the endoscope 5115 may be controlled. With the control, the endoscope 5115 at the distal end of the arm unit 5145 can be moved from an arbitrary position to an arbitrary position, and then can be fixedly supported at the position after the movement. Note that the arm unit 5145 may be operated by a so-called master-slave system. In this case, the arm unit 5145 can be remotely operated by the user via the input device 5161 installed at a place distant from the operating room.

Furthermore, in a case where the force control is applied, the arm control device 5159 receives external force from the user, and may perform so-called power assist control to drive the actuators of the joint portions 5147a to 5147c so that the arm unit 5145 can smoothly move according to the external force. With the control, the user can move the arm unit 5145 with relatively light force when moving the arm unit 5145 while being in direct contact with the arm unit 5145. Accordingly, the user can more intuitively move the endoscope 5115 with a simpler operation, and the user's convenience can be improved.

Here, in the endoscopic surgery, the endoscope 5115 has been generally supported by a doctor called scopist. In contrast, by use of the support arm device 5141, the position of the endoscope 5115 can be reliably fixed without manual operation, and thus an image of the operation site can be stably obtained and the surgical operation can be smoothly performed.

Note that the arm control device 5159 is not necessarily provided in the cart 5151. Furthermore, the arm control device 5159 is not necessarily one device. For example, the arm control device 5159 may be provided in each of the joint portions 5147a to 5147c of the arm unit 5145 of the support arm device 5141, and the drive control of the arm unit 5145 may be implemented by mutual cooperation of the plurality of arm control devices 5159.

### (Light Source Device)

The light source device 5157 supplies irradiation light, which is used in imaging the operation site, to the endoscope 5115. The light source device 5157 includes, for example, an LED, a laser light source, or a white light source configured by a combination of the laser light sources. In a case where the white light source is configured by a combination of RGB laser light sources, output intensity and output timing of the respective colors (wavelengths) can be controlled with high accuracy. Therefore, white balance of a captured image can be adjusted in the light source device 5157. Furthermore, in this case, the object to be observed is irradiated with the laser light from each of the RGB laser light sources in a time division manner, and the driving of the imaging element of the camera head 5119 is controlled in synchronization with the irradiation timing, so that images each corresponding to RGB can be imaged in a time division manner. According to the method, a color image can be obtained without providing a color filter to the imaging element.

Further, driving of the light source device 5157 may be controlled to change intensity of light to be output every predetermined time. The driving of the imaging element of the camera head 5119 is controlled in synchronization with change timing of the intensity of light, and images are acquired in a time division manner and are synthesized, so that a high-dynamic range image without clipped blacks and flared highlights can be generated.

Furthermore, the light source device 5157 may be configured to be able to supply light in a predetermined wavelength band corresponding to special light observation. In the special light observation, for example, so-called narrow band imaging is performed by radiating light in a narrower band than the irradiation light (that is, white light) at the time of normal observation, using wavelength dependence of absorption of light in a body tissue, to image a predetermined tissue such as a blood vessel in a mucosal surface layer at high contrast. Alternatively, in the special light observation, fluorescence observation to obtain an image by fluorescence generated by radiation of exciting light may be performed. In the fluorescence observation, irradiating the body tissue with exciting light to observe fluorescence from the body tissue (self-fluorescence observation), injecting a reagent such as indocyanine green (ICG) into the body tissue and irradiating the body tissue with exciting light corresponding to a fluorescence wavelength of the reagent to obtain a fluorescence image, or the like can be performed. The light source device 5157 may be configured to be able to supply narrow-band light and/or exciting light corresponding to such special light observation.

### (Camera Head and CCU)

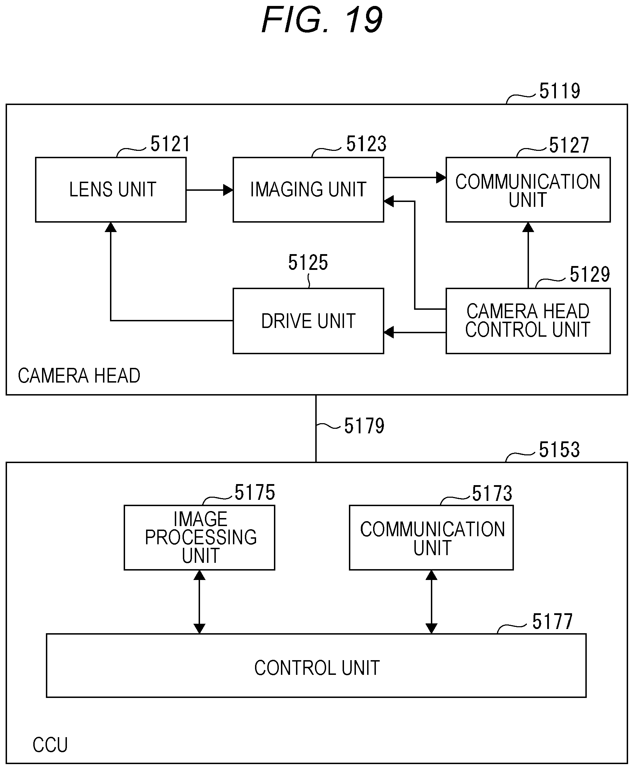

Functions of the camera head 5119 and the CCU 5153 of the endoscope 5115 will be described in more detail with reference to Fig. 19. Fig. 19 is a block diagram illustrating an example of functional configurations of the camera head 5119 and the CCU 5153 illustrated in Fig. 18.

Referring to Fig. 19, the camera head 5119 has a lens unit 5121, an imaging unit 5123, a drive unit 5125, a communication unit 5127, and a camera head control unit 5129 as its functions. Furthermore, the CCU 5153 includes a communication unit 5173, an image processing unit 5175, and a control unit 5177 as its functions. The camera head 5119 and the CCU 5153 are communicatively connected with each other by a transmission cable 5179.

First, a functional configuration of the camera head 5119 will be described. The lens unit 5121 is an optical system provided in a connection portion between the camera head 5119 and the lens barrel 5117. Observation light taken through the distal end of the lens barrel 5117 is guided to the camera head 5119 and enters the lens unit 5121. The lens unit 5121 is configured by a combination of a plurality of lenses including a zoom lens and a focus lens. Optical characteristics of the lens unit 5121 are adjusted to condense the observation light on a light receiving surface of the imaging element of the imaging unit 5123. Furthermore, the zoom lens and the focus lens have their positions on the optical axis movable for adjustment of the magnification and focal point of the captured image.

The imaging unit 5123 includes the imaging element, and is disposed at a rear stage of the lens unit 5121. The observation light having passed through the lens unit 5121 is focused on the light receiving surface of the imaging element, and an image signal corresponding to the observed image is generated by photoelectric conversion. The image signal generated by the imaging unit 5123 is provided to the communication unit 5127.

As the imaging element configuring the imaging unit 5123, for example, a complementary metal oxide semiconductor (CMOS)-type imaging element having Bayer arrangement and capable of color imaging is used. Note that, as the imaging element, for example, an imaging element that can image a high-resolution image of 4K or more may be used. By obtainment of the image of the operation site with high resolution, the operator 5181 can grasp the state of the operation site in more detail and can more smoothly advance the surgical operation.

Furthermore, the imaging element configuring the imaging unit 5123 includes a pair of imaging elements for respectively obtaining image signals for right eye and for left eye corresponding to 3D display. With the 3D display, the operator 5181 can more accurately grasp the depth of biological tissue in the operation site. Note that, in a case where the imaging unit 5123 is configured by multiple imaging elements, a plurality of systems of the lens units 5121 may be provided corresponding to the imaging elements.

Furthermore, the imaging unit 5123 is not necessarily provided in the camera head 5119. For example, the imaging unit 5123 may be provided immediately after the object lens inside the lens barrel 5117.

The drive unit 5125 includes an actuator, and moves the zoom lens and the focus lens of the lens unit 5121 by a predetermined distance along the optical axis under the control of the camera head control unit 5129. With the movement, the magnification and focal point of the captured image by the imaging unit 5123 can be appropriately adjusted.

The communication unit 5127 includes a communication device for transmitting or receiving various types of information to or from the CCU 5153. The communication unit 5127 transmits the image signal obtained from the imaging unit 5123 to the CCU 5153 through the transmission cable 5179 as raw data. At this time, to display the captured image of the operation site with low latency, the image signal is favorably transmitted by optical communication. This is because, in the surgical operation, the operator 5181 performs the surgical operation while observing a state of an affected part with the captured image, and thus display of a moving image of the operation site in as real time as possible is demanded for a safer and more reliable surgical operation. In the case of the optical communication, the communication unit 5127 is provided with a photoelectric conversion module that converts an electrical signal into an optical signal. The image signal is converted into the optical signal by the photoelectric conversion module and is then transmitted to the CCU 5153 via the transmission cable 5179.

Furthermore, the communication unit 5127 receives a control signal for controlling driving of the camera head 5119 from the CCU 5153. The control signal includes information regarding the imaging conditions such as information for specifying a frame rate of the captured image, information for specifying an exposure value at the time of imaging, and/or information for specifying the magnification and the focal point of the captured image, for example. The communication unit 5127 provides the received control signal to the camera head control unit 5129. Note that the control signal from the CCU 5153 may also be transmitted by the optical communication. In this case, the communication unit 5127 is provided with a photoelectric conversion module that converts an optical signal into an electrical signal, and the control signal is converted into an electrical signal by the photoelectric conversion module and is then provided to the camera head control unit 5129.

Note that the imaging conditions such as the frame rate, exposure value, magnification, and focal point are automatically set by the control unit 5177 of the CCU 5153 on the basis of the acquired image signal. That is, so-called an auto exposure (AE) function, an auto focus (AF) function, and an auto white balance (AWB) function are incorporated in the endoscope 5115.

The camera head control unit 5129 controls the driving of the camera head 5119 on the basis of the control signal received from the CCU 5153 via the communication unit 5127. For example, the camera head control unit 5129 controls driving of the imaging element of the imaging unit 5123 on the basis of the information for specifying the frame rate of the captured image and/or the information for specifying exposure at the time of imaging. Furthermore, for example, the camera head control unit 5129 appropriately moves the zoom lens and the focus lens of the lens unit 5121 via the drive unit 5125 on the basis of the information for specifying the magnification and focal point of the captured image. The camera head control unit 5129 may further have a function to store information for identifying the lens barrel 5117 and the camera head 5119.

Note that the configuration of the lens unit 5121, the imaging unit 5123, and the like is arranged in a hermetically sealed structure having high airtightness and waterproofness, so that the camera head 5119 can have resistance to autoclave sterilization processing.

Next, a functional configuration of the CCU 5153 will be described. The communication unit 5173 includes a communication device for transmitting or receiving various types of information to or from the camera head 5119. The communication unit 5173 receives the image signal transmitted from the camera head 5119 through the transmission cable 5179. At this time, as described above, the image signal can be favorably transmitted by the optical communication. In this case, the communication unit 5173 is provided with a photoelectric conversion module that converts an optical signal into an electrical signal, corresponding to the optical communication. The communication unit 5173 provides the image signal converted into the electrical signal to the image processing unit 5175.

Furthermore, the communication unit 5173 transmits the control signal for controlling driving of the camera head 5119 to the camera head 5119. The control signal may also be transmitted by the optical communication.

The image processing unit 5175 applies various types of image processing to the image signal as raw data transmitted from the camera head 5119. The image processing includes, for example, various types of known signal processing such as development processing, high image quality processing (such as band enhancement processing, super resolution processing, noise reduction (NR) processing, and/or camera shake correction processing), and/or enlargement processing (electronic zoom processing). Furthermore, the image processing unit 5175 performs wave detection processing for the image signal, for performing AE, AF, and AWB.

The image processing unit 5175 includes a processor such as a CPU or a GPU, and the processor operates according to a predetermined program, thereby performing the above-described image processing and wave detection processing. Note that in a case where the image processing unit 5175 includes a plurality of GPUs, the image processing unit 5175 appropriately divides the information regarding the image signal and performs the image processing in parallel by the plurality of GPUs.

The control unit 5177 performs various types of control related to imaging of the operation site by the endoscope 5115 and display of the captured image. For example, the control unit 5177 generates the control signal for controlling driving of the camera head 5119. At this time, in a case where the imaging conditions are input by the user, the control unit 5177 generates the control signal on the basis of the input by the user. Alternatively, in a case where the AE function, the AF function, and the AWB function are incorporated in the endoscope 5115, the control unit 5177 appropriately calculates optimum exposure value, focal length, and white balance according to a result of the wave detection processing by the image processing unit 5175, and generates the control signal.

Furthermore, the control unit 5177 displays the image of the operation site or the like in the display device 5155 on the basis of the image signal to which the image processing has been applied by the image processing unit 5175. At this time, the control unit 5177 recognizes various objects in the image of the operation site, using various image recognition technologies. For example, the control unit 5177 can recognize a surgical tool such as forceps, a specific living body portion, blood, mist at the time of use of the energy treatment tool 5135, or the like, by detecting a shape of an edge, a color, or the like of an object included in the image of the operation site. The control unit 5177 superimposes and displays various types of surgery support information on the image of the operation site, in displaying the image of the operation site on the display device 5155, using the result of recognition. The surgery support information is superimposed, displayed, and presented to the operator 5181, so that the surgical operation can be more safely and reliably advanced.

The transmission cable 5179 that connects the camera head 5119 and the CCU 5153 is an electrical signal cable supporting communication of electrical signals, an optical fiber supporting optical communication, or a composite cable thereof.

Here, in the illustrated example, the communication has been performed in a wired manner using the transmission cable 5179. However, the communication between the camera head 5119 and the CCU 5153 may be wirelessly performed. In a case where the communication between the camera head 5119 and the CCU 5153 is wirelessly performed, it is not necessary to lay the transmission cable 5179 in the operating room. Therefore, the situation in which movement of medical staffs in the operating room is hindered by the transmission cable 5179 can be eliminated.

An example of the operating room system 5100 to which the technology according to the present disclosure is applicable has been described. Note that, here, a case in which the medical system to which the operating room system 5100 is applied is the endoscopic surgical system 5113 has been described as an example. However, the configuration of the operating room system 5100 is not limited to the example. For example, the operating room system 5100 may be applied to a flexible endoscopic system for examination or a microsurgery system, instead of the endoscopic surgical system 5113.

The technology according to the present disclosure can be suitably applied to the transmission of the captured image from the CCU 5153 to the display device 5155 and the transmission of the captured image from the audiovisual controller 5107 to any of the display devices 5103A to 5103D and the centralized operation panel 5111 among the above-described configurations. In this case, the CCU 5153 and the audiovisual controller 5107 serve as the functions of the "image generation unit" and the "output unit" according to the present technology, and the display device 5155, the display devices 5103A to 5103D, and the centralized operation panel 5111 serve as the function of the "display unit" according to the present technology.

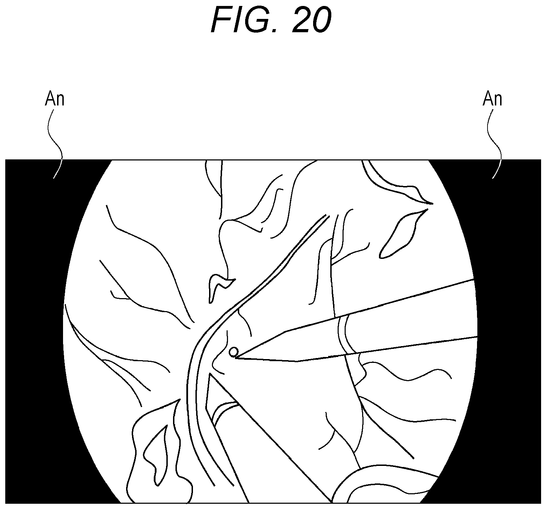

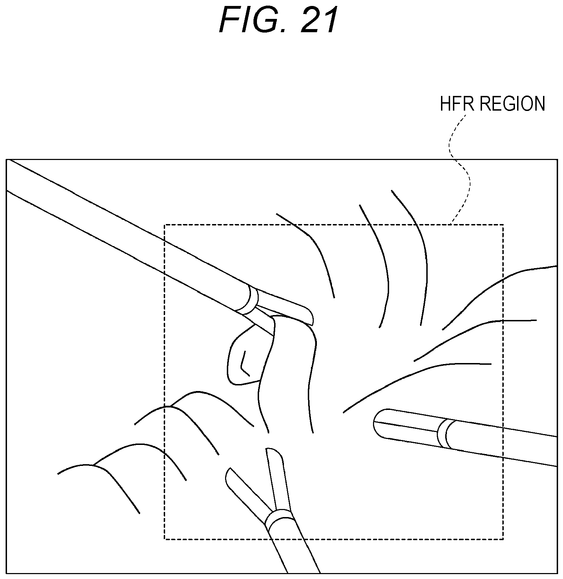

Figs. 20 and 21 are explanatory diagrams of setting examples of the HFR region in the application.

Fig. 20 illustrates an example of the captured image by the endoscope 5115.

Some endoscopes 5115 have a substantially circular field of view, and the captured image in this case has a non-effective region An (for example, a black region with luminance = 0) as illustrated in the drawing. In this case, it is conceivable to set a region excluding the non-effective region An in the captured image as the HFR region.

Alternatively, as illustrated in Fig. 21, the non-effective region An may not occur in the captured image depending on the endoscope 5115. In this case, it is conceivable to set a region presumed that the operator pays attention to in the captured image as the HFR region. At this time, it is conceivable to assume the region of interest of the operator on the basis of a motion amount. Alternatively, it is also conceivable to detect a distal end position of the surgical tool such as the forceps 5137 in the captured image and assume the region of interest as a region including at least the distal end position. Alternatively, the region of interest of the operator may be, for example, a fixed region including the center of the captured image.

As described above, by applying the technology according to the present disclosure to the transmission of the captured image in the operating room system 5100, it is possible to set the portion where the target object is displayed as the HFR region while reducing the bandwidth and power consumption related to image transmission in displaying the captured image on the display unit.

Therefore, it is possible to achieve both the reduction in the bandwidth and power consumption related to image transmission and the improvement in safety of the surgical operation.

### <6. Summary of Embodiments>

As described above, an image processing device (the imaging device 1, 1A, or 1B) as an embodiment includes an image generation unit (the control unit 4, the HFR/LFR image generation unit 9 or 9A, and the OSD image generation unit 10) that generates a first frame rate image (high frame rate image) based on the captured image and a second frame rate image (low frame rate image) having a frame rate lower than the first frame rate image, and an output unit (the HFR/LFR image generation unit 9 or 9A and the OSD image generation unit 10) that outputs the first frame rate image and the second frame rate image generated by the image generation unit so as to be displayed in different display regions of the display unit (the display unit 11 or 11A).

Therefore, it becomes possible to set the first (high) frame rate image for an image of a portion where an object is displayed and set the second (low) frame rate image for an image of the other portion, of an image constituting a display image. That is, by setting the low frame rate for the image of the portion other than the portion where the object is displayed, the amount of image data to be transmitted for display can be reduced as compared with a case of setting the high frame rate for the entire display image. Meanwhile, by setting the high frame rate for the image of the portion where the object is displayed, it is possible to prevent a decrease in responsiveness of the display image with respect to a motion of the object.

Therefore, it is possible to enable the photo opportunity not to be missed while reducing the bandwidth and power consumption related to image transmission when the captured image is displayed on the display unit.

Furthermore, in the image processing device as an embodiment, the image generation unit generates an image representing the notification information (I) to the user as the second frame rate image.

Therefore, it becomes possible to display the image representing the notification information to the user, such as an OSD image for providing notification of various settings, states, and the like of an imaging device, as the low frame rate image.

Therefore, it becomes possible to set the high frame rate image for the image of the portion where the object is displayed and set the low frame rate image for the image of the other portion, of the image constituting the display image, and it becomes possible to enable the photo opportunity not to be missed while reducing the bandwidth and power consumption related to image transmission when the captured image is displayed on the display unit.

Moreover, in the image processing device as an embodiment, a mode of displaying the notification information on the display unit and a mode of not displaying the notification information are switchable according to an operation, and the image generation unit generates the second frame rate image representing the notification information in the mode of displaying the notification information.

Therefore, it becomes possible to prevent display of the low frame rate image representing the notification information under the mode of not displaying the notification information. That is, it becomes possible to prevent an operation of displaying an image other than the captured image regardless of the user's operation (instruction).

Therefore, it is possible to prevent the user from feeling uncomfortable in enabling the photo opportunity not to be missed while reducing the bandwidth and power consumption related to image transmission.

Moreover, in the image processing device as an embodiment, the image generation unit performs frame update for the second frame rate image at update timing of the notification information.

Therefore, for example, image content of the low frame rate image is updated at the update timing of the notification information such as a remaining battery level or imaging mode information of the imaging device.

Therefore, the amount of transmission of the low frame rate image can be reduced, and the bandwidth and power consumption related to image transmission can be reduced.

Furthermore, in the image processing device as an embodiment, the image generation unit generates the second frame rate image representing the notification information as an image to be displayed in a display region on an outer periphery of the display region of the first frame rate image on the display unit.

That is, the low frame rate image representing the notification information is displayed in the display region on the outer periphery of the high frame rate image where the object is displayed. Therefore, even if an image of the entire region (total field of view) of the captured image is displayed in the display region of the high frame rate image, a part thereof is not blocked by the low frame rate image.

Therefore, it is possible to prevent deterioration of the visibility of the display image as a live image with the display of the low frame rate image representing the notification information.

Moreover, in the image processing device as an embodiment, the image generation unit generates an image of a partial region in the captured image as the first frame rate image, and generates an image of a region other than the partial region in the captured image as the second frame rate image.

Therefore, it becomes possible to display the captured image in the entire display region of the display unit in enabling a photo opportunity not to be missed while reducing a bandwidth and power consumption related to image transmission.

Therefore, it is possible to improve the visibility of the display image as a live image in enabling the photo opportunity not to be missed while reducing the bandwidth and power consumption related to image transmission.

Moreover, in the image processing device as an embodiment, the image generation unit generates an image of a detection region of a specific object in the captured image as the first frame rate image.

The specific object means an object that is a detection target in object detection processing for the captured image.

By setting the image of the detection region of the specific object as the high frame rate image as described above, it is possible to set the high frame rate for the portion presumed that the user pays attention to, that is, to improve the responsiveness of the display image, and can enable the photo opportunity not to be missed.

Furthermore, in the image processing device as an embodiment, the image generation unit generates an image of a detection region of a moving object in the captured image as the first frame rate image.

Therefore, it is possible to set the high frame rate image only for a region where the responsiveness of the display image is to be enhanced and set the low frame rate image for the other region in displaying the captured image as a live image on the display unit.

Therefore, it is possible to improve the efficiency of region division between the high frame rate image and the low frame rate image.

Moreover, in the image processing device as an embodiment, the output unit outputs information giving an instruction on the display regions of the first frame rate image and the second frame rate image to the display unit.

Therefore, the instruction on the display regions of the high frame rate image and the low frame rate image is given to the display unit.

Therefore, images having different frame rates can be displayed on the display unit in an appropriate layout.

Furthermore, in the image processing device (imaging device 1A) as an embodiment, the output unit (HFR/LFR image generation unit 9A) outputs the first frame rate image and the second frame rate image to the single transmission line (common transmission line L3) in a time-division manner.

Therefore, it becomes possible to aggregate cables for image transmission to the display unit into one cable.

Therefore, the number of components can be reduced and the cost can be reduced.

Furthermore, in the image processing device as an embodiment, the output unit time-divisionally outputs each partial image obtained by dividing the second frame rate image into regions to the transmission line.

Therefore, it becomes possible to output a plurality of frames of the high frame rate image while outputting an entire one frame of the low frame rate image.

Therefore, it is possible to appropriately output the high frame rate image and the low frame rate image while maintaining each frame rate by the single transmission line.

Moreover, the image processing device as an embodiment includes the display unit (display unit 11 or 11A) that combines and displays the first frame rate image and the second frame rate image output by the output unit.

The combine referred to here means to integrate a plurality of images into a single image.

By providing the above-described display unit, images having different frame rates can be presented to the user as a single image without discomfort.

Furthermore, in the image processing device (imaging device 1B) as an embodiment, the image generation unit sets a region to be the first frame rate image in the captured image on the basis of the user's operation.

Therefore, it becomes possible to set a region including the object that the user pays attention to as a region of the high frame rate image.

By setting the portion of the object presumed that the user pays attention to as the high frame rate image, it is possible to enable the photo opportunity not to be missed.

Furthermore, in the image processing device as an embodiment, the image generation unit sets the region to be the first frame rate image on the basis of the operation of designating a position on the screen for displaying the captured image.

Therefore, the operation of designating the region to be the high frame rate image can be implemented by an intuitive operation of designating the position on the screen while confirming the captured image displayed on the screen.

Therefore, the operability can be improved with respect to the operation related to the designation of the region to be the high frame rate image.

Moreover, in the image processing device as an embodiment, the operation of designating a position on the screen is an operation of touching the screen.

Therefore, the operation of designating the region to be the high frame rate image can be implemented by an intuitive operation of touching a required position on the screen on which the captured image is displayed.

Therefore, the operability can be improved with respect to the operation related to the designation of the region to be the high frame rate image.

Moreover, in the image processing device as an embodiment, the image generation unit sets a range of a region to be the first frame rate image on the basis of an operation of giving an instruction on a direction in a plane of a screen where the captured image is displayed.

Therefore, the operation of designating the range of the region to be the high frame rate image can be implemented by an intuitive operation of designating the direction in the plane of the screen while confirming the captured image displayed on the screen.

Therefore, the operability can be improved with respect to the operation related to the designation of the region to be the high frame rate image.

Furthermore, in the image processing device as an embodiment, the operation of giving an instruction on the direction is an operation of tracing the screen.

Therefore, the operation of designating the range of the region to be the high frame rate image is implemented by an intuitive operation of tracing the screen on which the captured image is displayed.

Therefore, the operability can be improved with respect to the operation related to the designation of the region to be the high frame rate image.

Furthermore, an image processing method as an embodiment is an image processing method including generating a first frame rate image based on a captured image and a second frame rate image having a frame rate lower than the first frame rate image; and outputting the generated first frame rate image and the generated second frame rate image so as to be displayed in different display regions of a display unit.

According to the image processing method as such an embodiment, it is also possible to obtain functions and effects similar to those of the image processing device as the above-described embodiment.

A program according to an embodiment is a program for causing an information processing device to implement functions to: generate a first frame rate image based on a captured image and a second frame rate image having a frame rate lower than the first frame rate image; and output the generated first frame rate image and the generated second frame rate image so as to be displayed in different display regions of a display unit.

That is, the program causes the information processing device to execute the processing described in Figs. 7, 8, 10, and the like.

Such a program facilitates implementation of the image processing device as an embodiment.

Then such a program can be stored in advance in a recording medium incorporated in a device such as a computer device, a ROM in a microcomputer having a CPU, or the like. Alternatively, such a program can be temporarily or permanently stored in a removable recording medium such as a semiconductor memory, a memory card, an optical disk, a magneto-optical disk, or a magnetic disk. Furthermore, such a removable recording medium can be provided as so-called package software.

Furthermore, such a program can be installed from a removable recording medium to a personal computer or the like, and can also be downloaded from a download site via a network such as a local area network (LAN) or the Internet.

Note that the effects described in the present specification are merely examples and are not limited, and other effects may be exhibited.

### <7. Present technology>

Note that the present technology can also have the following configurations.
(1) An image processing device including:
   an image generation unit configured to generate a first frame rate image based on a captured image and a second frame rate image having a frame rate lower than the first frame rate image; and
   an output unit configured to output the first frame rate image and the second frame rate image generated by the image generation unit so as to be displayed in different display regions of a display unit.
(2) The image processing device according to (1), in which
   the image generation unit generates an image representing notification information for a user as the second frame rate image.
(3) The image processing device according to (2), in which
   a mode of displaying the notification information on the display unit and a mode of not displaying the notification information are switchable according to an operation, and
   the image generation unit generates the second frame rate image representing the notification information in the mode of displaying the notification information.
(4) The image processing device according to (2) or (3), in which
   the image generation unit performs frame update for the second frame rate image at update timing of the notification information.
(5) The image processing device according to any one of (2) to (4), in which
   the image generation unit generates the second frame rate image representing the notification information as an image to be displayed in a display region on an outer periphery of the display region of the first frame rate image on the display unit.
(6) The image processing device according to any one of (1) to (5), in which
   the image generation unit generates an image of a partial region in the captured image as the first frame rate image, and generates an image of a region other than the partial region in the captured image as the second frame rate image.
(7) The image processing device according to (6), in which
   the image generation unit generates an image of a detection region of a specific object in the captured image as the first frame rate image.
(8) The image processing device according to (7), in which
   the image generation unit generates an image of a detection region of a moving object in the captured image as the first frame rate image.
(9) The image processing device according to any one of (1) to (8), in which
   the output unit outputs information giving an instruction on the display regions of the first frame rate image and the second frame rate image to the display unit.
(10) The image processing device according to any one of (1) to (9), in which
   the output unit outputs the first frame rate image and the second frame rate image to a single transmission line in a time-division manner.
(11) The image processing device according to (10), in which
   the output unit time-divisionally outputs each partial image obtained by dividing the second frame rate image into regions to the transmission line.
(12) The image processing device according to any one of (1) to (11), further including:
   the display unit configured to combine and display the first frame rate image and the second frame rate image output by the output unit.
(13) The image processing device according to any one of (6) to (12), in which
   the image generation unit sets a region to be the first frame rate image in the captured image on the basis of an operation of a user.
(14) The image processing device according to (13), in which
   the image generation unit sets a region to be the first frame rate image on the basis of an operation of designating a position on a screen where the captured image is displayed.
(15) The image processing device according to (14), in which
   the operation of designating a position on a screen is an operation of touching the screen.
(16) The image processing device according to (15), in which
   the image generation unit sets a range of a region to be the first frame rate image on the basis of an operation of giving an instruction on a direction in a plane of a screen where the captured image is displayed.
(17) The image processing device according to (16), in which
   the operation of giving an instruction on a direction is an operation of tracing the screen.

### REFERENCE SIGNS LIST

- 1, 1A, 1B: Imaging device
- 2: Imaging unit
- 3: Image processing unit
- 4: Control unit
- 5: Power supply unit
- 6: Operation unit
- 6a: Touch panel
- 7: Sensor unit
- 8: Recording control unit
- 9, 9A: HFR/LFR image generation unit
- 10: OSD image generation unit
- 11, 11A: Display unit
- 11a: Display screen
- L1: H transmission line
- L2: L transmission line
- L3: Common transmission line
- F1: Image generation unit
- F2: Output unit
- F3: Display unit
- Wa: Region frame

## Claims

1. An image processing device comprising:
an image generation unit configured to generate a first frame rate image based on a captured image and a second frame rate image having a frame rate lower than the first frame rate image; and
an output unit configured to output the first frame rate image and the second frame rate image generated by the image generation unit so as to be displayed in different display regions of a display unit.

2. The image processing device according to claim 1, wherein
the image generation unit generates an image representing notification information for a user as the second frame rate image.

3. The image processing device according to claim 2, wherein
a mode of displaying the notification information on the display unit and a mode of not displaying the notification information are switchable according to an operation, and
the image generation unit generates the second frame rate image representing the notification information in the mode of displaying the notification information.

4. The image processing device according to claim 2, wherein
the image generation unit performs frame update for the second frame rate image at update timing of the notification information.

5. The image processing device according to claim 2, wherein
the image generation unit generates the second frame rate image representing the notification information as an image to be displayed in a display region on an outer periphery of the display region of the first frame rate image on the display unit.

6. The image processing device according to claim 1, wherein
the image generation unit generates an image of a partial region in the captured image as the first frame rate image, and generates an image of a region other than the partial region in the captured image as the second frame rate image.

7. The image processing device according to claim 6, wherein
the image generation unit generates an image of a detection region of a specific object in the captured image as the first frame rate image.

8. The image processing device according to claim 7, wherein
the image generation unit generates an image of a detection region of a moving object in the captured image as the first frame rate image.

9. The image processing device according to claim 1, wherein
the output unit outputs information giving an instruction on the display regions of the first frame rate image and the second frame rate image to the display unit.

10. The image processing device according to claim 1, wherein
the output unit outputs the first frame rate image and the second frame rate image to a single transmission line in a time-division manner.

11. The image processing device according to claim 10, wherein
the output unit time-divisionally outputs each partial image obtained by dividing the second frame rate image into regions to the transmission line.

12. The image processing device according to claim 1, further comprising:
the display unit configured to combine and display the first frame rate image and the second frame rate image output by the output unit.

13. The image processing device according to claim 6, wherein
the image generation unit sets a region to be the first frame rate image in the captured image on a basis of an operation of a user.

14. The image processing device according to claim 13, wherein
the image generation unit sets a region to be the first frame rate image on a basis of an operation of designating a position on a screen where the captured image is displayed.

15. The image processing device according to claim 14, wherein
the operation of designating a position on a screen is an operation of touching the screen.

16. The image processing device according to claim 15, wherein
the image generation unit sets a range of a region to be the first frame rate image on a basis of an operation of giving an instruction on a direction in a plane of a screen where the captured image is displayed.

17. The image processing device according to claim 16, wherein
the operation of giving an instruction on a direction is an operation of tracing the screen.

18. An image processing method comprising:
generating a first frame rate image based on a captured image and a second frame rate image having a frame rate lower than the first frame rate image; and outputting the generated first frame rate image and the generated second frame rate image so as to be displayed in different display regions of a display unit.

19. A program for causing an information processing device to implement functions to:
generate a first frame rate image based on a captured image and a second frame rate image having a frame rate lower than the first frame rate image; and output the generated first frame rate image and the generated second frame rate image so as to be displayed in different display regions of a display unit.
